# EUROPEAN PATENT APPLICATION

(11) **EP 4 786 947 A1**
(43) Date of publication of application: **05.08.2026**
(21) Application number: 25155247.7
(22) Date of filing: 31.01.2025
(51) Int. Cl.: G01M 17/02

(54) **SYSTEMS AND METHODS FOR INSPECTING TIRE CASING**

(71) Applicant: Bridgestone Europe NV/SA, 1930 Zaventem (BE)
(72) Inventor: Vincent, Bram Jozef, 1930 Zaventem (BE)
(74) Representative: Marchetti, Alessio

(57) **Abstract**

A tire inspection system includes a rotation assembly configured to selectively couple with a tire and rotate the tire about an axis of rotation, at least one sensor configured to facilitate acquiring vision data of the tire, and one or more processing circuits. The one or more processing circuits are configured to receive the vision data of the tire, generate, based on the vision data, a graphical representation of the tire for display on a user interface, determine, based on an input from a user to the user interface, an identification of a feature on the graphical representation, the anomaly on the graphical representation being indicative of the feature on the tire, and determine, based on the identification of the anomaly, whether to perform a maintenance action on the tire.

## Description

### BACKGROUND

A retread tire may be inspected to identify features such as cracks, punctures, deformations, etc. Based on the results of the inspection, a user may determine whether the retread tire is to be repaired or discarded.

### SUMMARY

One embodiment relates to a tire inspection system. The tire inspection system includes a rotation assembly configured to selectively couple with a tire and rotate the tire about an axis of rotation, at least one sensor configured to facilitate acquiring vision data of the tire, and one or more processing circuits. The one or more processing circuits are configured to receive the vision data of the tire, generate, based on the vision data, a graphical representation of the tire for display on a user interface, determine, based on an input from a user to the user interface, an identification of a feature on the graphical representation, the feature on the graphical representation being indicative of the feature on the tire, and determine, based on the identification of the feature, whether to perform one or more maintenance actions on the tire.

Another embodiment relates to a non-transitory computer-readable medium. The non-transitory computer-readable medium configured to store instructions thereon, which, when executed by a processor, cause a processor to receive vision data of a tire, generate, based on the vision data, a graphical representation of the tire for display on a user interface, determine, based on an input from a user to the user interface, an identification of a feature on the graphical representation, the feature on the graphical representation being indicative of the feature on the tire, and determine, based on the identification of the feature, whether to perform a maintenance action on the tire.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE DRAWINGS

FIG. 1 is a front, cross-sectional view of a tire casing, according to an exemplary embodiment.
FIG. 2 is a front, cross-sectional view of a retread element, according to an exemplary embodiment.
FIG. 3 is a front, cross-sectional view of a retreaded tire having the tire casing of FIG. 1 and the retread element of FIG. 2, according to an exemplary embodiment.
FIG. 4 is a front, cross-sectional view of the tire casing of FIG. 1, according to an exemplary embodiment.
FIGS. 5-11 are various perspective views of a tire inspection system and a tire loading and unloading system, according to an exemplary embodiment.
FIGS. 12 and 13 are side views of the tire inspection system and the tire loading and unloading system of FIGS. 5-11, according to an exemplary embodiment.
FIG. 14 is a first side view of the tire inspection system of FIGS. 5-11, according to an exemplary embodiment.
FIGS. 15 and 16 are second side views of the tire inspection system of FIGS. 5-11, according to an exemplary embodiment.
FIG. 17 is a front view of the tire inspection system of FIGS. 5-11, according to an exemplary embodiment.
FIG. 18 is a detailed perspective view of a first rotation assembly and a second rotation assembly of the tire inspection system of FIGS. 5-11 coupled with a tire casing, according to an exemplary embodiment.
FIG. 19 is a perspective view of a tire inspection system coupled with a tire casing, according to an exemplary embodiment.
FIG. 20 is a detailed front view of a mandrel of the first rotation assembly and the second rotation assembly of FIG. 18 coupled with a tire casing, according to an exemplary embodiment.
FIG. 21 is a perspective view of the first rotation assembly of FIG. 18 coupled with a tire casing and including an interior sensor assembly, according to an exemplary embodiment.
FIG. 22 is a perspective view of the tire inspection assembly of FIG. 19, according to an exemplary embodiment.
FIG. 23 is a schematic block diagram of a tire inspection control system, according to an exemplary embodiment.
FIG. 24 is a front view of an image-based representation of a tire casing, according to an exemplary embodiment.
FIG. 25 is a perspective view of a cloud point representation of a tire casing, according to an exemplary embodiment.
FIG. 26 is a perspective view of a graphical representation of a tire casing including the cloud point representation of FIG. 25 wrapped onto the image-based representation of FIG. 24, according to an exemplary embodiment.
FIG. 27 is a user interface including the graphical representation of FIG. 25, according to an exemplary embodiment.

### DETAILED DESCRIPTION

Before turning to the figures, which illustrate certain exemplary embodiments in detail, it should be understood that the present invention is not limited to the details or methodology set forth in the description or illustrated in the figures. It should also be understood that the terminology used herein is for the purpose of description only and should not be regarded as limiting.

The techniques of the present invention facilitate inspecting a graphical representation of a tire casing to identify features, such as anomalies, on the actual tire casing without having a user inspect the actual tire casing itself (e.g., by an *in situ* inspection). The anomalies may include damaged material, deformities, worn material, undesired material, scuffs, scratches, holes, nicks, punctures, tears, bumps, bulges, cracks, cuts, discolorations, burns, abrasions, weathering, stone trapping, or another type of anomaly. In response to the detection of an anomaly, the user or a control system may determine, based on a characteristic of the one or more anomalies whether to perform a maintenance action, for example, whether to repair the tire casing, or alternatively, whether instead to discard the tire casing. Tire casings with anomalies that can be repaired (or tire casings without any anomalies or with anomalies that do not warrant being repaired) may be used for future retreading operations. Tires that are deemed not to warrant repair can be discarded and used for other purposes (e.g., recycled).

The techniques of the present invention include acquiring vision data of the tire casing using a tire inspection system. The tire inspection system includes a first rotation assembly and a second rotation assembly configured to couple with the tire casing and rotate the tire casing. The first rotation assembly and a second rotation assembly include arms configured to extend within an opening of the tire casing and move in a radial direction relative to the tire casing such that the arms engage with the bead areas (e.g., the arms of the first rotation assembly engage with a first bead area and the arms of the second rotation assembly engage with a second bead area opposite the first bead area) to couple with the tire casing. The tire inspection system includes a vertical guide assembly configured to receive the tire casing and raise the tire casing such that the arms of the first rotation assembly and the second rotation assembly are axially aligned with the opening of the tire casing. The first rotation assembly may be configured to translate in a direction towards the tire casing such that the arms thereof extend within the opening. The tire inspection system may include an interior sensor assembly including a first sensor configured to capture vision data of an interior surface of the tire casing and an exterior sensor assembly including the second sensor configured to capture vision data of an exterior surface of the tire casing. The interior sensor assembly may be configured to position the first sensor to align with a center line of the tire casing. The interior sensor assembly may be configured to move the first sensor in a radial direction and rotate the first sensor about an axis of rotation parallel to the radial direction. The exterior sensor assembly may include a robotic arm configured to variously position the second sensor about the tire casing to capture vision data of the exterior surface thereof.

The tire inspection system may generate a graphical representation of the tire casing based on the vision data and display the graphical representation on a display. A user may manipulate the graphical representation to identify anomalies thereon, which are indicative of anomalies on the actual tire casing. In some embodiments the tire inspection system may utilize a machine learning model to automatically identify the anomalies based on the vision data and user inputs (e.g., from inspections of preceding tires) stored in a database.

### Terms

As used herein, the term "tire tread" refers to the rubber on the circumference of a tire that makes contact with the ground. The tire tread is often manufactured separately from the rest of the tire, known as the "tire carcass." The tire tread can be applied to the tire carcass or tire casing to form a new tire assembly or a retreaded tire assembly.

As used herein, the terms "axial" and "axially" refers to the direction parallel to an axis.

As used herein, the terms "radial" and "radially" refer to the direction toward or away from a central axis.

As used herein, the terms "circumferential" or "circumferentially" refer to an arc along a round shape (e.g., along the circumference).

### Overview of a Retread Operation

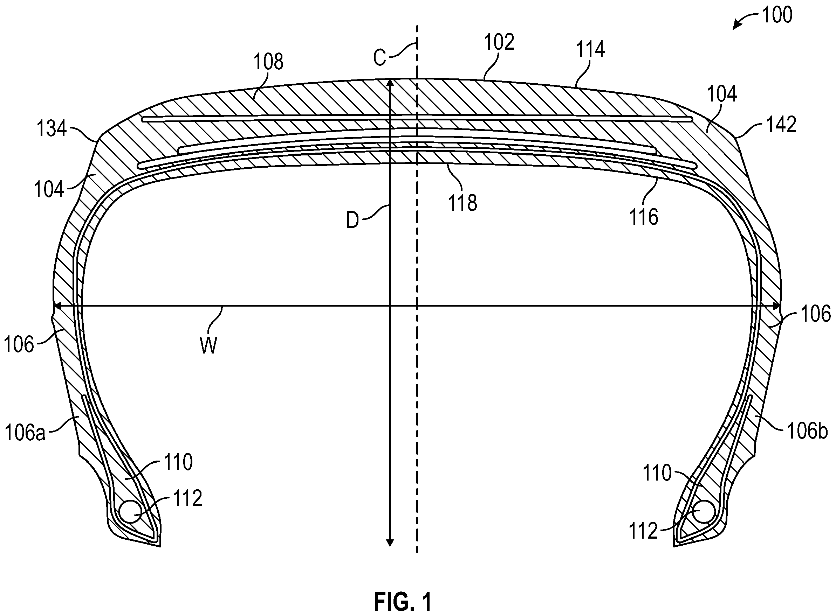

Referring to FIG. 1, a front, cross-sectional view of a tire casing 100 (e.g., tire carcass, etc.) is shown, according to an exemplary embodiment. After the tire tread of a tire wears beyond a certain limit, the tire is either discarded, re-grooved, or retreaded before it is used on a vehicle. In some embodiments, during a retread operation, what remains of the tire tread is removed from the tire casing 100 by a buffing machine through a buffing operation. During the buffing operation, the tire tread is ground away from the tire casing 100, leaving a tread mounting surface (e.g., buffed mounting surface, mating surface, bonding surface, curing surface, etc.), shown as mounting surface 102, on the tire casing 100. The mounting surface 102 extends circumferentially about the tire casing 100 and extends axially across a crown 108 until it terminates at shoulder areas 104. The mounting surface 102 exhibits a curvature between the shoulder areas 104. In some embodiments, after the buffing operation, the mounting surface 102 is buffed to a slightly rounded (e.g., toroidal) radius extending between the shoulder areas 104. By way of example, the mounting surface 102 may define a diameter, shown as casing diameter D, where the casing diameter D is greater proximate a center line C of the mounting surface 102 when compared to the casing diameter D proximate the shoulder areas 104. The tire casing 100 may be a radial tire or a bias ply tire.

As shown in FIGS. 1, 3, and 4, the tire casing 100 includes a pair of sidewalls 106 bounded by a generally radial crown 108 (e.g., outer wall, etc.) that extends between the sidewalls 106. Each of the sidewalls 106 extend radially inward from the crown 108 and terminate at a bead area 110 structured for mounting on a tire rim. The bead area 110 may be designed in a variety of configurations depending on tire type, tire size, or rim configuration, for example. The bead area 110 includes a bead 112 that has metal strands or wires to improve the strength of the bead area 110.

The sidewalls 106 may include multiple layers, such as a rubber layer, a radial ply, and an inner liner, which cooperate to provide strong and flexible sidewalls 106. The sidewalls 106 are joined to the crown 108 and a tire tread 113 (e.g., the retread element 120 after a retreading and curing operation, the tread of a retread tire, the tread of a newly manufactured tire) through a pair of shoulder areas 104. The shoulder areas 104 are contiguous with the sidewalls 106 and the crown 108. In some embodiments, the shoulder areas 104 are contiguous with the tire tread 113.

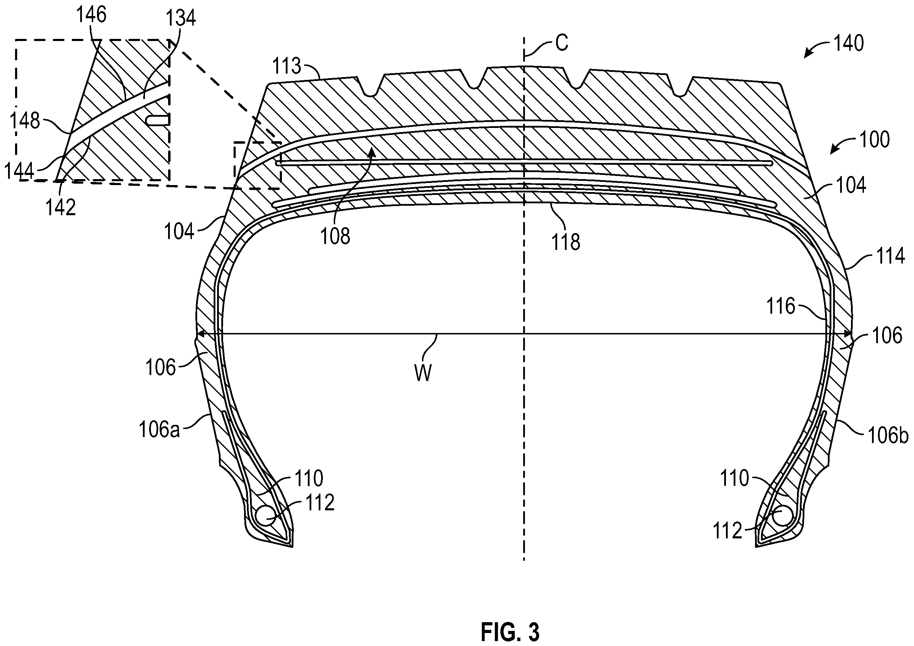

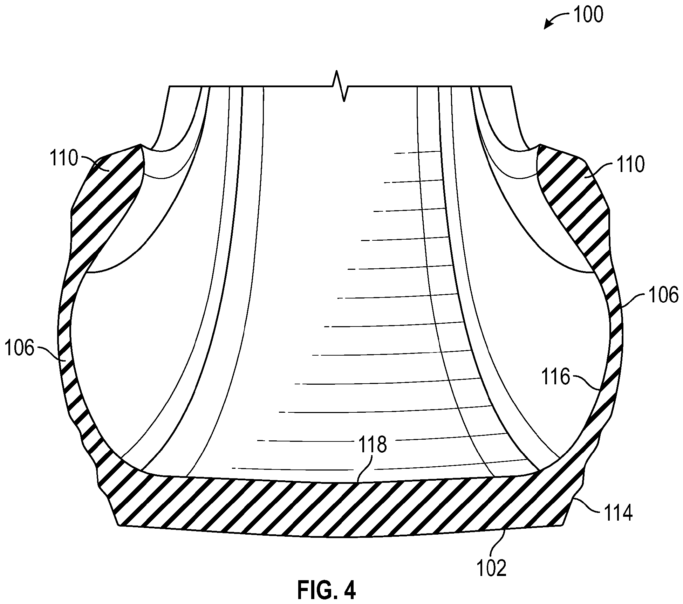

The tire casing 100 defines a width, shown as casing width W. The casing width W may be defined by an axial distance from an outer surface of a left sidewall 106a (e.g., an outer surface of the vehicular exterior side sidewall 106, an outer surface of an axially outward sidewall 106, an outer surface of a first sidewall, left as viewed from FIGS. 1 and 3, etc.) to an outer surface of a right sidewall 106b (e.g., an outer surface of the vehicular interior side sidewall 106, an outer surface of an axially inward sidewall 106, an outer surface of a second sidewall, right as viewed from FIGS. 1 and 3, etc.). When the tire casing 100 is fully inflated (e.g., pneumatically inflated), the sidewalls 106 define a slightly rounded (e.g., elliptical or toroidal) radius or profile extending vertically between the mounting surface 102 and the bead area 110. By way of example, the casing width W is smaller within an area proximate the bead area 110 when compared to the casing width W proximate a vertical midpoint (e.g., center point, center region, a point at which the casing width W is at a maximum, etc.) of the tire casing 100. As shown in FIGS. 1 and 4, the tire casing 100 includes an exterior tire casing surface, shown as exterior surface 114, and an interior tire casing surface, shown as interior surface 116, opposite the exterior surface 114. The exterior surface 114 includes the mounting surface 102, exterior surfaces of the left sidewall 106a and the right sidewall 106b, and exterior surfaces of the bead area 110. In various embodiments, with the retread element 120 coupled with the tire casing 100, the exterior surface 114 includes the retread element front side 128. The interior surface 116 includes an inner liner 118 of the tire casing 100 (e.g., an interior facing surface of the crown 108 opposite the mounting surface 102), interior surfaces of the left sidewall 106a and the right sidewall 106b, and interior surfaces of the bead area 110. By way of example, when the tire casing 100 is installed on a wheel, the exterior surface 114 faces outward and may be exposed to an external environment, and the interior surface 116 faces inward and may be exposed to and/or, at least partially, define an air-filled volume of the inflated tire casing 100.

In some embodiments, a portion of the tire tread is left behind on the tire casing 100, such as if a user would like to increase a thickness of the crown 108 before applying a retread element, as described herein, to the tire casing 100. When the tire tread has been removed, the mounting surface 102 is left behind (e.g., exposed, revealed, etc.). After the tire tread is removed and the mounting surface 102 is exposed, a process called skiving and filling may be performed on the tire casing 100. Skiving and filling is the removal of and filling of anomalies or other features or portions for which a physical transformation is desired (e.g., damaged material, deformities, worn material, undesired material, scuffs, scratches, holes, nicks, punctures, tears, bumps, bulges, cracks, cuts, discolorations, burns, abrasions, weathering, stone trapping, etc.) present in the tire casing 100 prior to taking a maintenance action, such as making a repair or performing a retread operation. In some cases, the tire casing 100 accumulates anomalies due to bits or other sharp objects the tire comes in contact with during use. The anomalies are first ground smooth by an appropriate cutting tool (e.g., sidewall buffer, wire brush, etc.), and then filled with repair gum (e.g., uncured rubber material, etc.). The affected areas may be filled to the level of the mounting surface 102 (e.g., such that the mounting surface 102 remains smooth) to avoid air pockets between the mounting surface 102 and the later applied retread element.

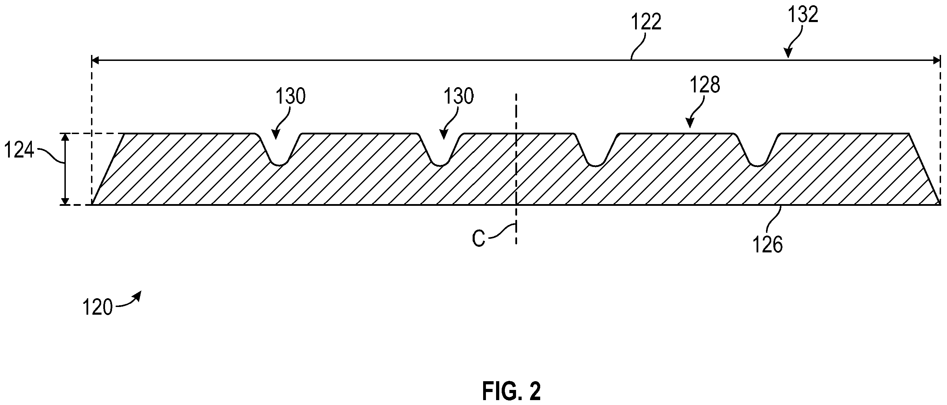

After the buffing, skiving, and filling operations, a retread element 120 (e.g., precured tire tread, etc.) is coupled to the tire casing 100. Referring to FIG. 2, a front, cross-sectional view of the retread element 120 is shown. The retread element 120 (e.g., tread band, etc.) may be formed from rubber, natural rubber, synthetic rubber, and various polymers and compounding ingredients, such as carbon black, silica, anti-degradants, and zinc oxide. In some embodiments, the retread element 120 is otherwise formed of other suitable materials. The retread element 120 may be formed in a strip having a tread width 122 corresponding to a width of the mounting surface 102 between the shoulder areas 104. The tread width 122 is in a range of approximately 5 inches (in) and approximately 15 in, e.g., approximately 6 inches (in) to approximately 14 inches, inclusive (e.g., about 5.7 in., about 6 in., about 7 in., about 8 in., about 9 in., about 10 in., about 11 in., about 12 in., about 13 in., about 14 in., about 14.7 in., etc.).

Additionally, the retread element 120 has a tread thickness 124 (e.g., element thickness or a tread span that is an extent of the retread element in a thickness direction). The tread thickness 124 is in a range of approximately .3 inches and approximately 2 inches, inclusive (e.g., about.285 in., about .3 in., about .5 in., about .75 in., about 1 in., about 1.25 in., about 1.5 in., about 1.75 in., about 2 in., about 2.1 in., etc.). In some embodiments, the retread element 120 (e.g., the tread width 122 and the tread thickness 124) is otherwise suitably dimensioned. The retread element 120 includes a retread element back side 126 (e.g., generally planar mounting surface, continuous surface, mating surface, binding surface, etc.). The retread element 120 includes a retread element front side 128 (e.g., generally planar opposing surface, road-contacting surface, tread surface, etc.), which is opposite of the retread element back side 126. The retread element front side 128 is configured to engage with a road surface and includes a plurality of tread grooves 130 configured to channel water and provide added traction during certain road and adverse weather conditions. In some embodiments, the retread element front side 128 includes a tread pattern 132 (e.g., a tread design, a series of treads, a tread pattern repetition, etc.). The tread pattern 132 may include a plurality of lugs, grooves, cuts, sipes, sipe cuts, and similar features.

Referring now to FIG. 3, a front, cross-sectional view of a retreaded tire having the tire casing 100 is shown. The retread element 120 is coupled to the tire casing 100 using an adhesive 134 (e.g., cushion gum, uncured gum, uncured adhesive, polyurethane adhesive, rubber cement, liquid adhesive, etc.). The adhesive 134 is extruded freely on to the mounting surface 102 after the buffing, skiving, and filling operations. In some embodiments, the adhesive 134 is cushion gum. Specifically, after the tire is buffed, the adhesive 134 is extruded on to the mounting surface 102, and the retread element back side 126 is positioned on the adhesive 134 such that the retread element back side 126 extends between the shoulder areas 104 of the tire casing 100. Accordingly, a retreaded tire assembly is formed.

Following formation, the retreaded tire assembly is then placed in a pressure chamber, and the adhesive 134 is cured. In some embodiments, the retreaded tire assembly is placed within a curing envelope and placed within a curing chamber (e.g., autoclave, pressure vessel, etc.). The temperature and/or pressure of the curing chamber is controlled such that the retread element 120 conforms to the tire casing 100. After the retreaded tire assembly is cured, a retreaded tire 140 is formed. The retreaded tire 140 includes sidewalls 106. Portions of the shoulder areas 104 are formed by the adhesive 134 and the retread element 120. In some embodiments, the sidewalls 106 extend from the retread element front side 128 to the bead area 110.

The retreaded tire 140 includes a first bondline 142. The first bondline 142 is interposed between the retread element 120 and the tire casing 100. More specifically, the first bondline 142 is interposed between the mounting surface 102 and the adhesive 134. Both sides of the retreaded tire 140 (e.g., the vehicular exterior side and the vehicular interior side) include the first bondline 142. The first bondline 142 is a boundary between the adhesive 134 and the mounting surface 102. The first bondline 142 extends across the crown 108 between the shoulder areas 104 and extends circumferentially about the retreaded tire 140. The first bondline edge 144 may be visible on the shoulder areas 104 after the adhesive 134 and the retread element 120 have been applied to the tire casing 100. As used herein, a "bondline edge" is the edge of a border (e.g., the first bondline 142, the second bondline 146, etc.) that exists between two portions of the retreaded tire 140. By way of example, a bondline edge may be a border axially between the adhesive 134 and the mounting surface 102. By way of another example, a bondline edge may be a border axially between the retread element 120 and the tire casing 100. In some embodiments, the bondline edges define substantially elliptical shapes, substantially cylindrical shapes, shapes complementary to the shapes of the two portions of the retreaded tire 140 between which the bondline edges exist, or are otherwise shaped.

The retreaded tire 140 further includes a second bondline 146. The second bondline 146 is interposed between the retread element 120 and the tire casing 100. More specifically, the second bondline 146 is interposed between the adhesive 134 and the retread element 120. Both sides of the retreaded tire 140 (e.g., the vehicular exterior side and the vehicular interior side) may include the second bondline 146. The second bondline 146 is a boundary between the adhesive 134 and the retread element 120. The second bondline 146 extends circumferentially about the retreaded tire 140. The second bondline 146 includes a second bondline edge 148 that may be visible on the shoulder areas 104 after the adhesive 134 and the retread element 120 have been applied to the tire casing 100.

The retreading operation described above to form the retreaded tire 140 may be referred to as a precure retreading process (e.g., cold cure retreading), wherein the new tire tread 113 is formed from a precured (e.g., vulcanized) strip of tread (e.g., the retread element 120). In some embodiments, the retreaded tire 140 is formed from another type of retreading process. By way of example, the retreaded tire 140 may be formed from a mold cure retreading process (e.g., hot cure retreading), wherein the new tire tread 113 is formed by building up or otherwise applying raw rubber material (e.g., uncured rubber, un-vulcanized rubber, green tread rubber) to the mounting surface 102. The mold cure retreading process includes a buffing operation similar to or the same as the buffing operation described above with respect to the precure retreading process, in which case the description is incorporated herein.

After the buffing, skiving, and filling operations, uncured rubber is applied to the mounting surface 102 of the tire casing 100. In some embodiments, two or more layers of the uncured rubber are applied to the mounting surface 102 of the tire casing 100. The uncured rubber may be applied such that the substantial entirety of the mounting surface 102 is covered with the uncured rubber. The tire casing 100 with the uncured rubber is then cured in a curing mold to shape the uncured rubber into a desired tread pattern and to adhere the new tire tread 113 to the tire casing 100. Accordingly, a retreaded tire assembly is formed. The retreaded tire 140 referred to herein may be formed by the mold cure retreading process, the precure retreading process, or any other suitable retreading process.

### Inspecting Tire Casing

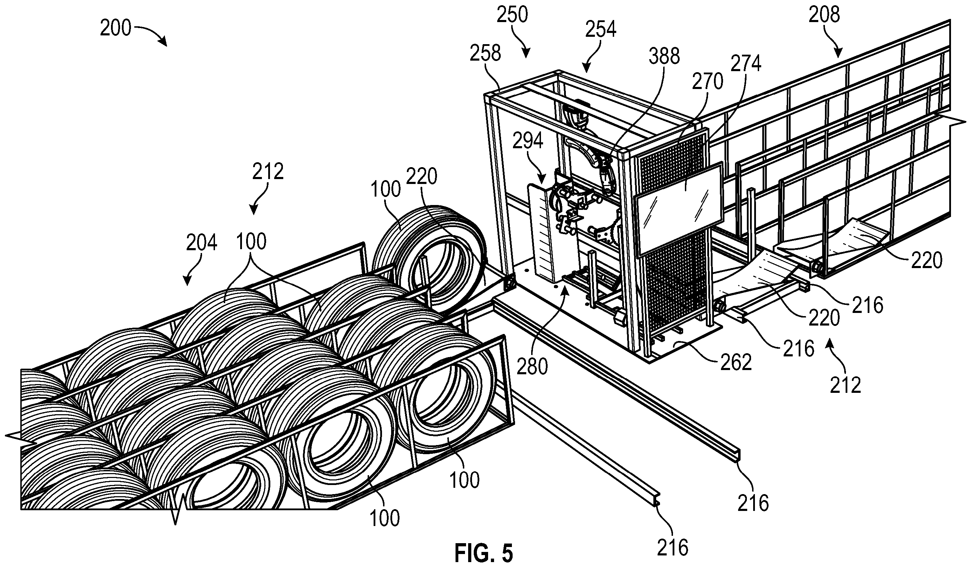

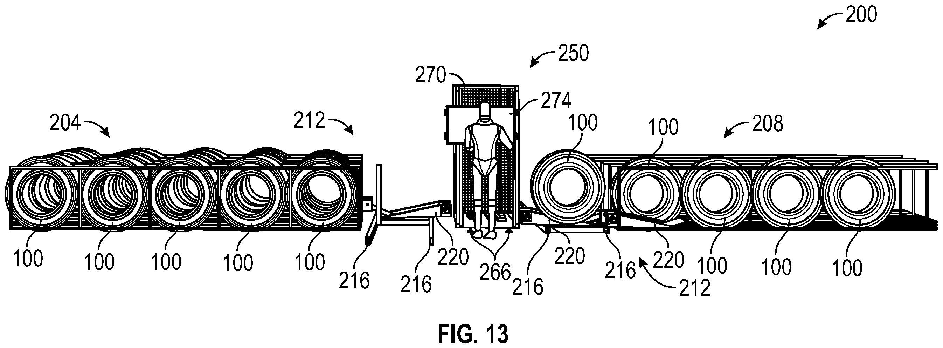

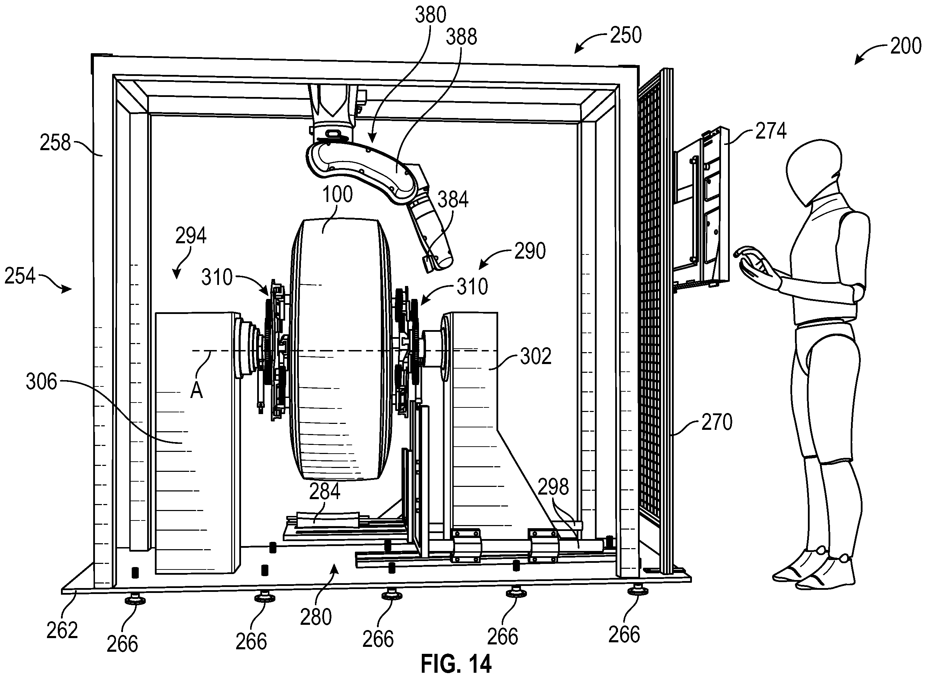

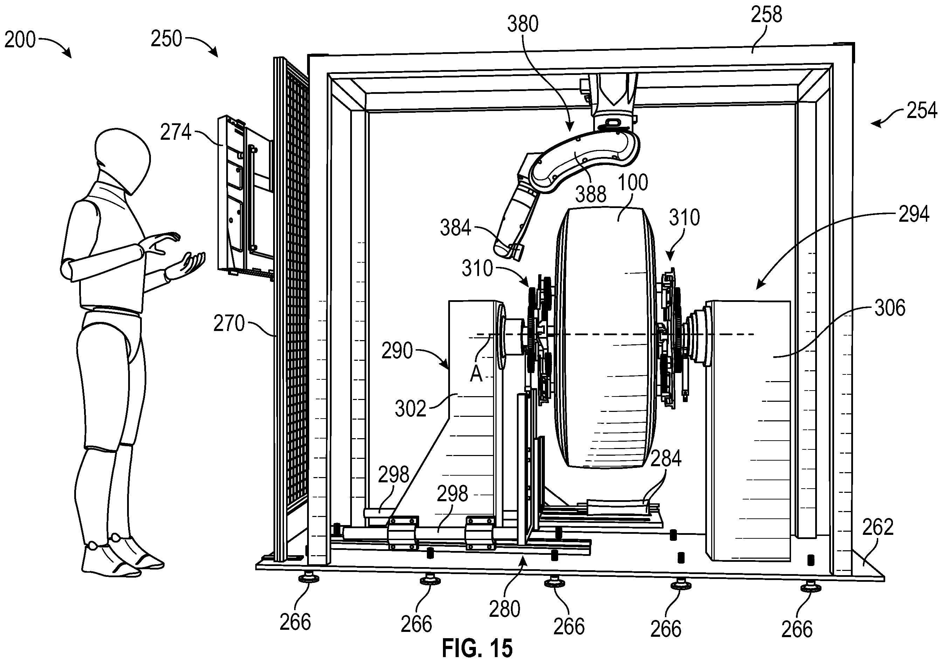

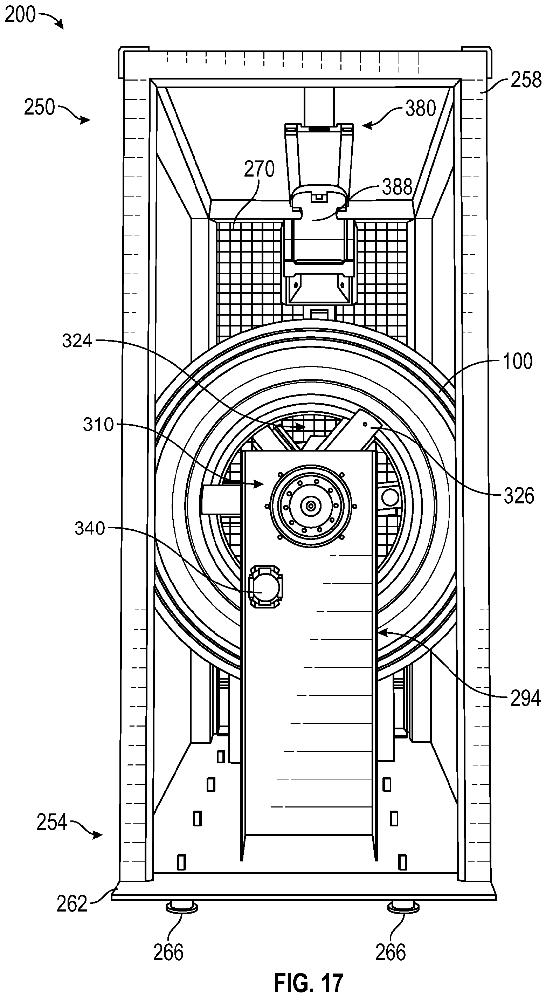

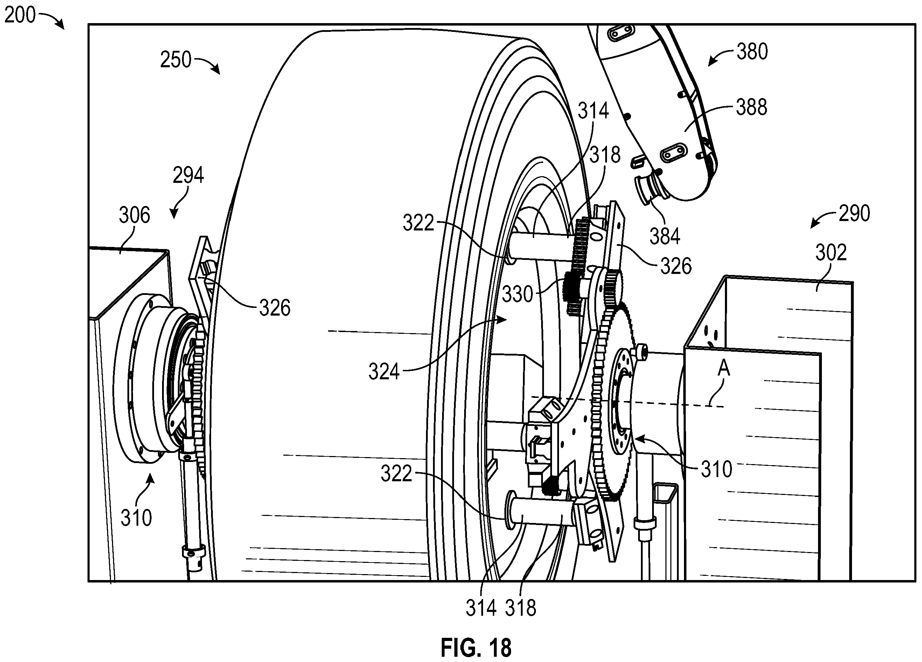

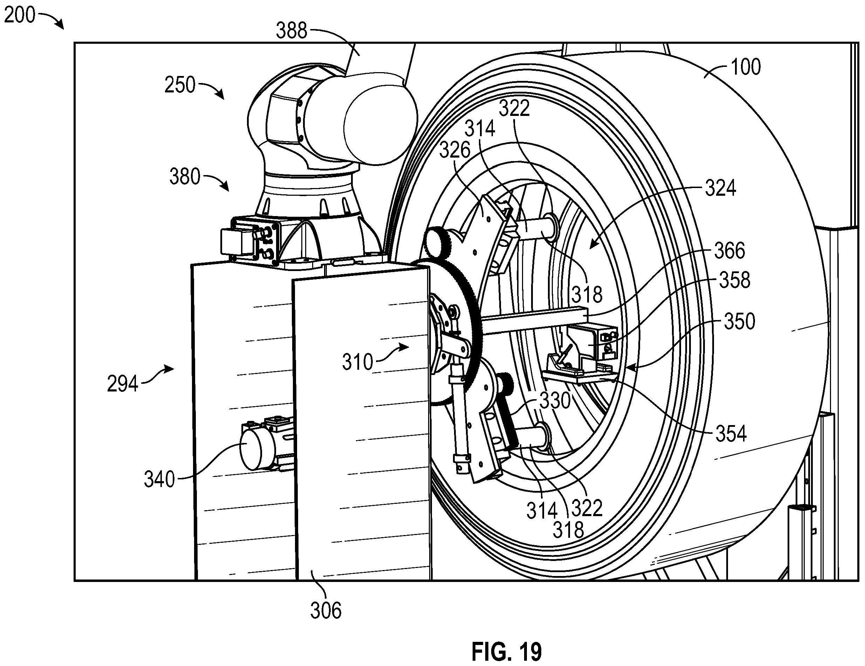

As shown in FIGS. 5-22, a tire moving and inspecting system (e.g., tire casing inspection assembly, retread tire inspection assembly, etc.), shown as system 200, includes a first storage area 204, a second storage area 208, a tire loading and unloading system 212 configured to facilitate loading and unloading tires from the first storage area 204 and the second storage area 208, a tire manipulation and sensing system, shown as tire inspection system 250, positioned between the first storage area 204 and the second storage area 208, and a control system, shown as tire inspection control system 400, operatively coupled with and configured to control operation of the tire loading and unloading system 212 and the tire inspection system 250. In some embodiments, the system 200 includes more or fewer components.

As shown in FIGS. 5, 6, 12, and 13, the first storage area 204 and the second storage area 208 are configured to store (e.g., arrange, support, etc.) one or more tire casings 100. The first storage area 204 and the second storage area 208 include straight and bent sections of railings (e.g., supports, frame members, etc.) configured to support the tire casings 100 in rows. The railings support the tire casings 100 such that the mounting surface 102 is engaged with a ground surface. The first storage area 204 and the second storage area 208 include four rows configured to support the tire casings 100. In some embodiments, the first storage area 204 and the second storage area 208 include more or fewer rows. The tire casings 100 stored in the first storage area 204 may include tire casings 100 in queue to be inspected (e.g., by a user and/or the tire inspection system 250) for anomalies. The tire casings 100 stored in the second storage area 208 may include tire casings 100 that have undergone inspection. In some embodiments, the tire casings 100 are sorted in the second storage area 208. By way of example, tire casings 100 determined to not require any repairs may be stored in a first row of the second storage area 208, tire casings 100 determined to undergo repairs (e.g., buffing, skiving, filling, retreading, etc.) may be stored in a second row of the second storage area 208, and tire casings 100 determined to be at the end of their use cycles (e.g., tire casings 100 to be discarded, thrown out, etc.) may be stored in a third row of the second storage area 208.

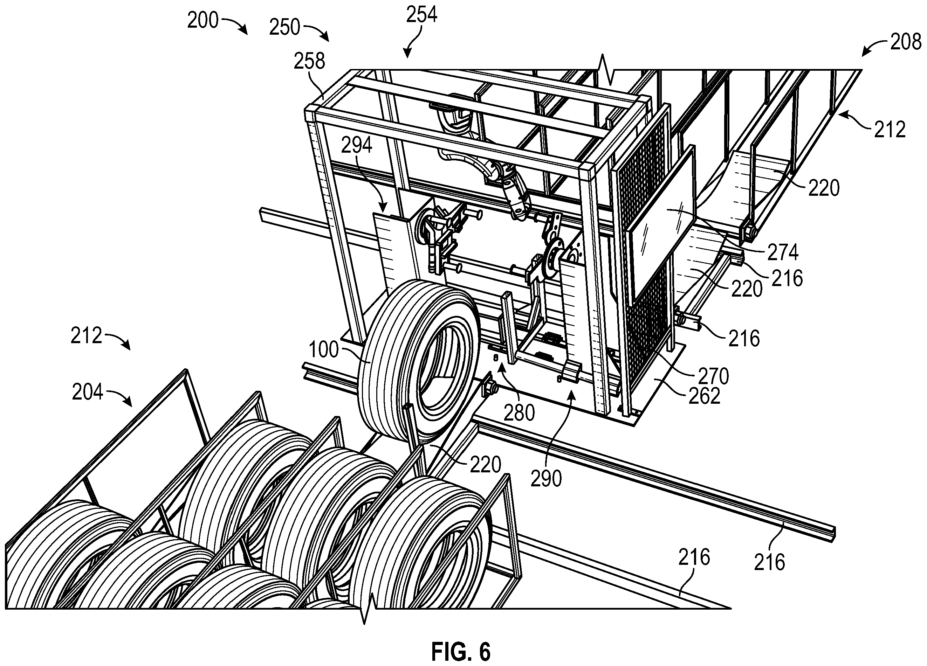

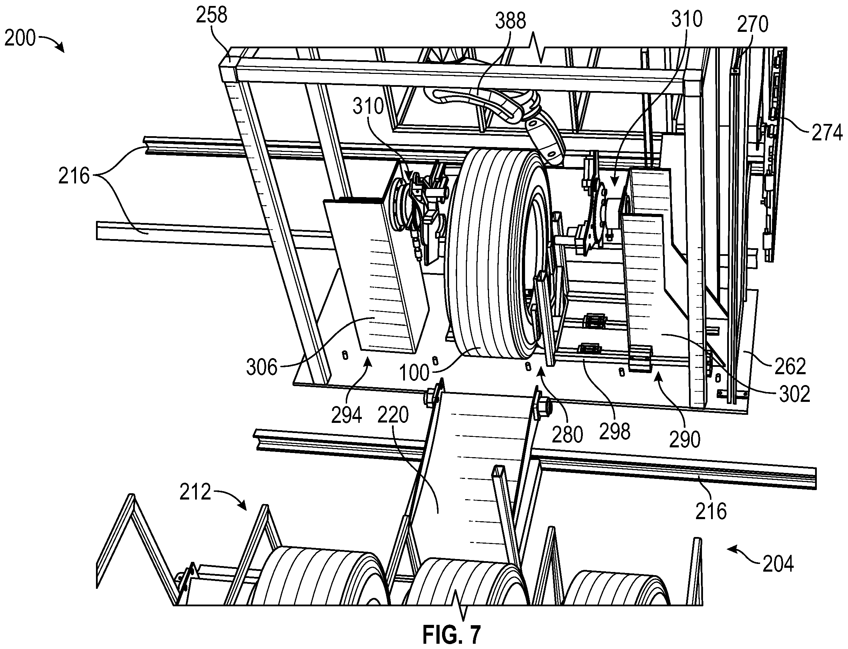

As shown in FIGS. 5-13, the tire loading and unloading system 212 is positioned at an exit (e.g., a tire output end) of the first storage area 204 before the tire inspection system 250 and at an entrance (e.g., a tire input end) of the second storage area 208 after the tire inspection system 250. The tire loading and unloading system 212 includes a pair of frame rails, shown as guide rails 216, and a tire ramp, shown as ramp 220, slidably coupled with the guide rails 216. The ramp 220 is configured to translate or otherwise slide along the guide rails 216. The ramp 220 may be operatively coupled with a motor (e.g., the motor 340) configured to facilitate translating the ramp 220 along the guide rails 216. By way of example, the motor may provide rotational movement, and a mechanical assembly such as an actuator may convert the rotational movement to linear motion to translate the ramp 220 along the guide rails 216. The ramp 220 may be translated between the rows of the first storage area 204 to facilitate receiving tire casings 100 therefrom. The ramp 220 may be pivotably coupled with the guide rails 216 and about an axis of rotation to facilitate providing the tire casing 100 to the tire inspection system 250. By way of example, the ramp 220 may translate along the guide rails 216 such that the tire casing 100 supported thereby is aligned with the tire inspection system 250 *(see,* e.g., FIGS. 6 and 7), and the ramp 220 may rotate about the axis of rotation such that the tire casing 100 rolls off of the ramp 220 and onto the tire inspection system 250 (e.g., onto the support arms 284 of the vertical guide assembly 280). Similarly, the ramp 220 may be translated between the rows of the second storage area 208 to facilitate storing the tire casings 100 thereby. The ramp 220 may be pivotably coupled with the guide rails 216 and about an axis of rotation to facilitate receiving the tire casing 100 from the tire inspection system 250 and providing the tire casing 100 to the second storage area 208. By way of example, the ramp 220 may rotate about the axis of rotation such that the tire casing 100 rolls off of the ramp 220 and into the second storage area 208 to be stored thereby. In some embodiments, each row of the first storage area 204 and the second storage area 208 includes a ramp configured to facilitate loading the tire casings 100 onto or off of the ramps 220 of the tire loading and unloading system 212.

As shown in FIGS. 5-22, the tire inspection system 250 includes a frame and base assembly, shown as support assembly 254, a vertical tire casing positioning assembly, shown as vertical guide assembly 280, supported by the support assembly 254, a translatable tire casing rotation assembly, shown as first rotation assembly 290, supported by the support assembly 254, a stationary tire casing rotation assembly, shown as second rotation assembly 294, supported by the support assembly 254, a tire casing interior sensor positioning assembly, shown as interior sensor assembly 350, coupled with the second rotation assembly 294, and a tire casing exterior sensor positioning assembly, shown as exterior sensor assembly 380, coupled with and supported by the support assembly 254. Generally, the tire inspection system 250 is configured to receive the tire casing 100 and manipulate (e.g., move, rotate, bend, etc.) the tire casing 100 to record visual data (e.g., image data, video data, geometric data, LIDAR data, etc.) thereof.

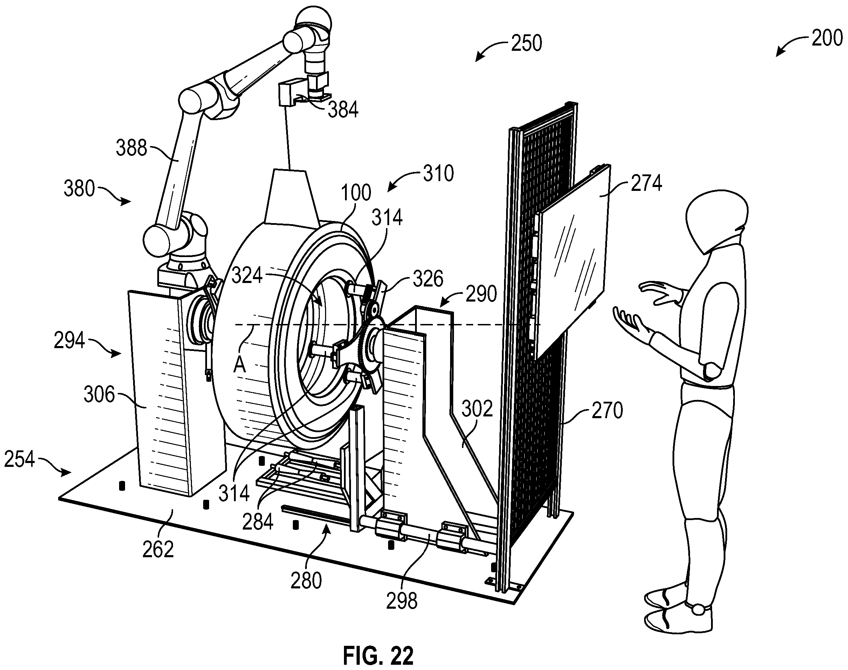

As shown in FIGS. 5-17, the support assembly 254 includes one or more straight or bent sections of support members, shown as frame 258, and a support platform, shown as base 262, coupled with the frame 258. The frame 258 includes one or more vertical support members extending in a vertical direction away from the base 262, one or more longitudinal support members coupled with the vertical support members and extending in a longitudinal direction perpendicular to the vertical direction, and one or more lateral support members coupled with the vertical support members and the longitudinal support members and extending in a lateral direction perpendicular to the vertical direction and the longitudinal direction. As shown in FIGS. 5 and 6, the exterior sensor assembly 380 is coupled with a lateral support member. In some embodiments, the exterior sensor assembly 380 is coupled with a different component of the support assembly 254 and/or the tire inspection system 250 (e.g., the second rotation assembly 294). In some embodiments, as shown in FIG. 22, the support assembly 254 does not include the frame 258.

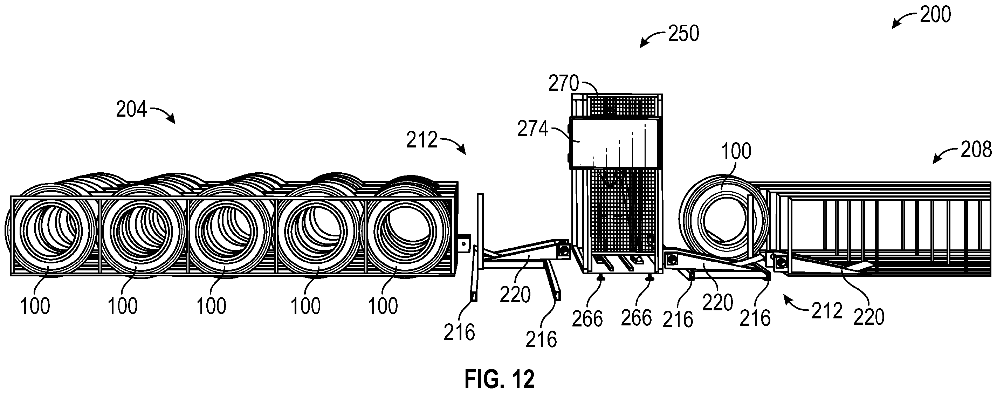

As shown in FIGS. 5-11, 14-17, and 22, the base 262 extends in the lateral direction and the longitudinal direction within a plane substantially parallel to a ground surface (e.g., a manufacturing floor). The base 262 is configured to couple with the frame 258, the vertical guide assembly 280, the first rotation assembly 290, and the second rotation assembly 294. As shown in FIGS. 12-17, the support assembly 254 includes a plurality of legs 266 coupled to a bottom surface of the base 262. The legs 266 are configured to engage with the ground surface and vertically space the base 262 from the ground surface. In some embodiments, a height of the legs 266 is adjustable to account for uneven ground surfaces. By way of example, the legs 266 may be adjusted to adjust the vertical spacing of the base 262 from the ground surface (e.g., such that the base 262 remains stable on uneven ground surfaces). In some embodiments, the legs 266 are fixedly coupled with (e.g., welded to, bolted to, fastened to, etc.) the ground surface to inhibit movement of the tire inspection system 250 along the ground surface. In other embodiments, the support assembly 254 does not include the legs 266 such that the base 262 is fixedly coupled with the ground surface. In yet other embodiments, the support assembly 254 does not include the base 262 such that the frame 258, the vertical guide assembly 280, the first rotation assembly 290, and the second rotation assembly 294 are fixedly coupled with the ground surface.

As shown in FIGS. 5-17 and 22, the support assembly 254 includes a user interface support 270 coupled to the base 262. The user interface support 270 is configured to support one or more input and output devices (e.g., operator controls), shown as user interface 274. The user interface 274 is configured to provide a user with the ability to control one or more functions of and/or provide commands to the system 200 and the tire inspection system 250 and the components thereof (e.g., load/unload the tire casing 100, rotate the tire casing 100, capture vision data of the tire casing 100, etc.). The user interface 274 may include one or more displays such as a touchscreen, a liquid crystal display ("LCD"), a light emitting diode ("LED") display, gauges, warning lights, etc. for displaying or communicating information. The user interface 274 may include one or more input devices such as buttons, switches, knobs, levers, dials, a mouse, etc. In some embodiments, the support assembly 254 does not include the user interface support 270.

As shown in FIGS. 5-11, 14-16, and 22, the vertical guide assembly 280 is configured to support the tire casing 100 and move the tire casing 100 in a vertical direction. The vertical guide assembly 280 includes tire casing support arms, shown as support arms 284, actuatable between a first, lowered position and a second, raised position. The support arms 284 are configured to engage with (e.g., contact, support, etc.) the tire casing 100 as the vertical guide assembly 280 moves the support arms 284 (and the tire casing 100 supported thereby) between the first, lowered position and the second, raised position. The support arms 284 may be operably coupled with an actuator configured to selectively extend and retract to move the vertical guide assembly 280 between the first, lowered position and the second, raised position. As shown in FIGS. 6 and 7, the support arms 284 are in the first, lowered position. In the first lowered position, the support arms 284 are configured to receive a tire casing 100 from the ramp 220 of the tire loading and unloading system 212. With the tire casing 100 supported by the support arms 284, the vertical guide assembly 280 may transition to the second, raised position. As discussed in greater detail below, in the second, raised position, the first rotation assembly 290 and the second rotation assembly 294 may engage with the tire casing 100, and the interior sensor assembly 350 and the exterior sensor assembly 380 may capture the vision data indicative of the appearance of the tire casing 100. After the vision data is captured, the vertical guide assembly 280 may lower the tire casing 100 to the first, lowered position and supply the tire casing 100 to the ramp 220 of the tire loading and unloading system 212 to be stored by the second storage area 208.

As shown in FIGS. 5-11, 14-17, and 22, the first rotation assembly 290 is slidably coupled with the base 262 in a lateral direction. The first rotation assembly 290 includes a pair of frame rails, shown as guide rails 298, and a support structure, shown as housing 302, slidably coupled with the guide rails 298. The housing 302 and the components coupled therewith (e.g., the mandrel 310) are configured to translate or otherwise slide along the guide rails 298. The housing 302 may be operatively coupled with a motor (e.g., the motor 340) configured to facilitate translating the housing 302 along the guide rails 298. By way of example, the motor may provide rotational movement, and a mechanical assembly such as an actuator may convert the rotational movement to linear motion to translate the housing 302 along the guide rails 298. In some embodiments, the first rotation assembly 290 omits the guide rails 298 such that the housing 302 is configured to laterally move by way of a different method (e.g., a motor configured to drive wheels, tracks, etc. coupled to the housing 302). In some embodiments, the first rotation assembly 290 is fixedly coupled with the base 262.

As shown in FIGS. 5-11, 14-19, and 22, the second rotation assembly 294 is fixedly coupled with the base 262 to inhibit movement thereof. The second rotation assembly 294 includes a support structure, shown as housing 306, coupled with the base 262. In some embodiments, the second rotation assembly 294 is configured to move or otherwise translate (e.g., in a manner such as the first rotation assembly 290) relative to the base 262.

As shown in FIGS. 5-11, 14-16, and 18-22, each of the first rotation assembly 290 and the second rotation assembly 294 includes a rotatable hub, shown as mandrel 310, configured to receive the tire casing 100 and selectively couple with the tire casing 100 such that the tire casing 100 rotates with the mandrel 310 about an axis of rotation, shown as axis A. By way of example, the mandrel 310 of the first rotation assembly 290 and the mandrel 310 of the second rotation assembly 294 may engage with the tire casing 100 and rotate synchronously (e.g., at the same rotational speed) with each other to rotate the tire casing 100. The mandrel 310 includes a plurality of tire casing engagement arms, shown as arms 314, each defining a shaft portion, shown as shaft 318, and a flange portion (e.g., finger portion), shown as flange 322. The flange 322 is positioned at an end of the shaft 318 and defines a radius that is larger than a radius of the shaft 318. As shown, the mandrel 310 includes three arms 314.

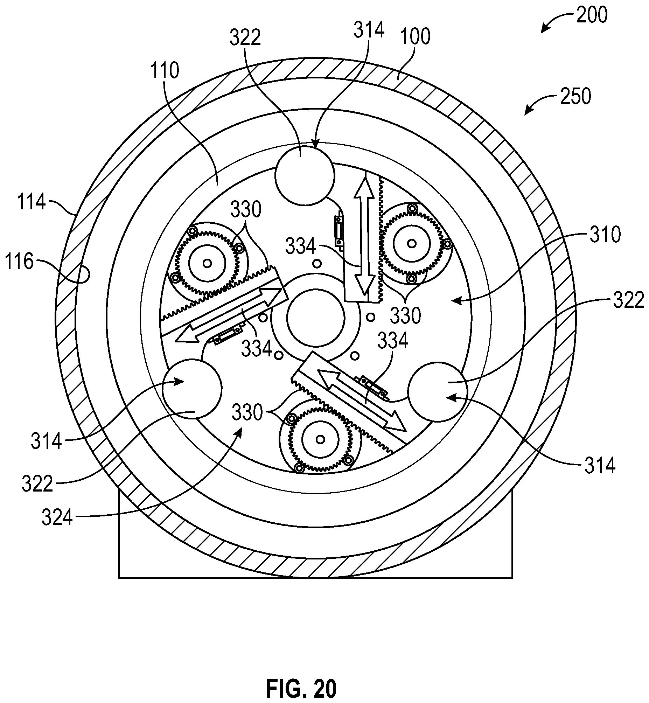

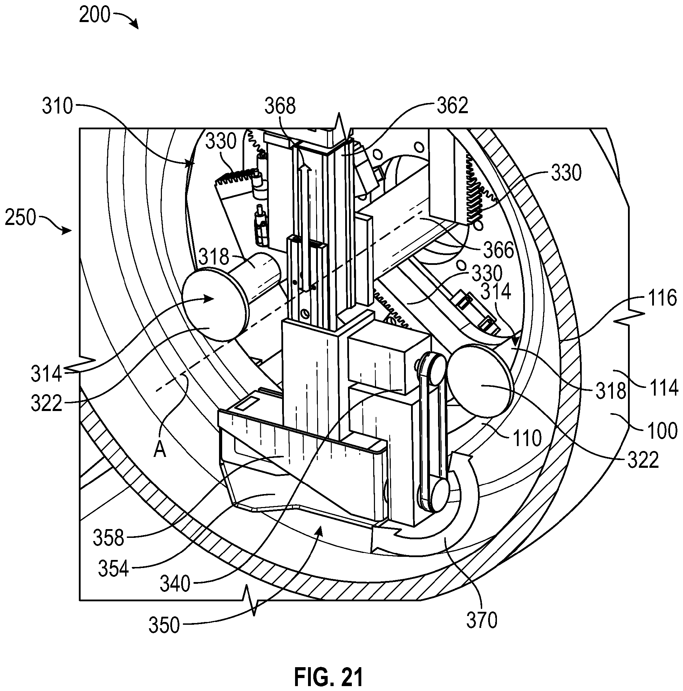

In some embodiments, the mandrel 310 includes more or fewer than three arms 314 (e.g., two arms 314, four arms 314, etc.). The arms 314 are configured to extend within (e.g., axially through) an opening 324 of the tire casing 100 and engage with the bead area 110 to support the tire casing 100. Specifically, the flange 322 is configured to engage with the interior surface 116 of the tire casing 100 *(see,* e.g., FIGS. 20 and 21) to flex (e.g., bend, spread, manipulate, curve, etc.) the bead area 110 (e.g., left and right bead areas 110) axially away from the center line C of the mounting surface 102 (e.g., axially away from a center point of the crown 108). By way of example, as discussed in greater detail below, as the first rotation assembly 290 translates in the lateral direction away from the tire casing 100 and when the flanges 322 of the arms 314 are engaged with the tire casing 100, the flanges 322 may engage with the interior surface 116 of the tire casing 100 to flex the bead area 110 axially away from the center line C of the mounting surface 102. That is, flanges 322 of a first set of arms 314 of the first rotation assembly 290 engage with a first bead area 110, and flanges 322 of a second set of arms 314 of the second rotation assembly 294 engage with a second bead area 110 opposite the first bead area 110.

The mandrel 310 further includes a coupling plate, shown as plate 326, and a gear assembly, shown as rack and pinion 330, coupled with the plate 326. The rack and pinion 330 is configured to slidably couple the arms 314 with the plate 326. As shown in FIG. 20, the arms 314 are coupled with the rack of the rack and pinion 330 such that rotation of the pinion of the rack and pinion 330 causes the arms 314 to translate in a direction 334 parallel with a plane in which the plate 326 extends. By way of example, the arms 314 may translate in a radial direction (e.g., the direction 334) relative to the tire casing 100 engaged therewith. The rack and pinion 330 may translate the arms 314 in a radially inward direction (e.g., along the direction 334 towards the axis A) such that a spacing between the arms 314 is small enough such that the arms 314 can extend through the opening 324 of the tire casing 100 (e.g., to receive the tire casing 100 onto the arms 314).

In some embodiments, the rack and pinion 330 translates the arms 314 in a radially outward direction (e.g., along the direction 334 away from the axis A) such that shaft 318 contacts the bead area 110 and the flange 322 is positioned to engage with the interior surface 116 of the tire casing 100 *(see,* e.g., the position of the arms 314 in FIGS. 20 and 21). Coupling the tire casing 100 with the arms 314 facilitates centering the tire casing 100 with the axis A at the bead area 110 as opposed to centering the tire casing 100 with the axis A at the mounting surface 102. By way of example, other tire coupling systems may couple with the tire casing 100 along the mounting surface 102 thereof, which may include anomalies and other uneven areas. Centering the tire casing 100 with these anomalies and uneven surfaces may cause undesirable oscillations during rotation of the tire casing 100. Accordingly, centering the tire casing 100 with the axis A at the bead area 110 using the arms 314 helps provide even and smoother rotation of the tire casing 100 (e.g., because the bead area 110 is less prone to anomalies or being uneven and is generally more uniform than the mounting surface 102).

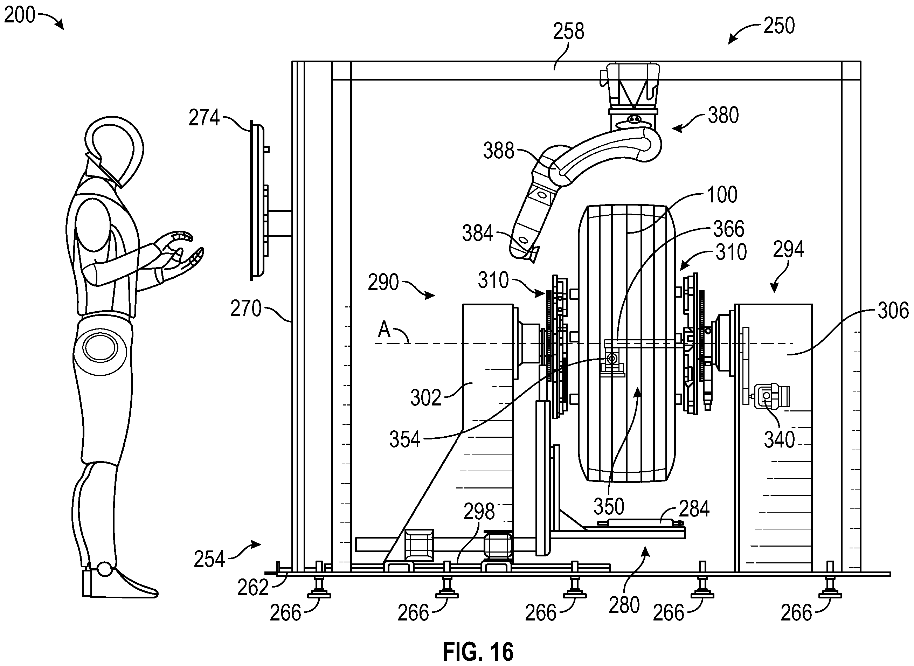

As shown in FIGS. 16, 17, 19, and 23, the tire inspection system 250 includes a drive system (e.g., electric motor, servo motor, internal combustion engine, a hydraulically-operated motor, etc.), shown as motor 340, configured to drive one or more components of the tire inspection system 250. In some embodiments, the tire inspection system 250 includes a plurality of motors 340 configured to drive one or more components of the tire inspection system 250 independently of each other. The motor 340 may be operatively coupled with the plate 326 to selectively provide rotational energy thereto to rotate the arms 314 and the tire casing 100 coupled therewith. In some embodiments, a single motor 340 provides rotational energy to the mandrel 310 of the first rotation assembly 290 and the second rotation assembly 294. In other embodiments, the first rotation assembly 290 includes a first motor 340 and the second rotation assembly 294 includes a second motor 340. In some embodiments, the first rotation assembly 290 includes a first motor 340 configured to facilitate translating the first rotation assembly 290 in the lateral direction and a second motor 340 configured to facilitate rotating the mandrel 310 and the arms 314 thereof. In some embodiments, the motor 340 is configured to selectively provide rotational energy to the pinion of the rack and pinion 330 to translate the arms 314. In some embodiments, each respective rack and pinion 330 includes a motor 340 configured to facilitate translating each respective arm 314 independent of the other arms 314. In such embodiments, the arms 314 are configured to translate in the directions 334 independent of the rotation of the arms 314 about the axis A.

As shown in FIGS. 16, 19, and 21, the interior sensor assembly 350 is coupled with the second rotation assembly 294 and is configured to capture vision data of the interior surface 116 of the tire casing 100. The interior sensor assembly 350 includes a tire casing interior sensor, shown as first sensor 354, a mount, shown as sensor mount 358, configured to support the first sensor 354, a guide rail, shown as sensor rail 362, configured to slidably couple with the sensor mount 358, and a shaft, shown as sensor shaft 366. The first sensor 354 may include various sensors positioned (e.g., by the sensor shaft 366) at least partially within the tire casing 100 when the tire casing 100 is supported by the first rotation assembly 290 and the second rotation assembly 294. By way of example, the first sensor 354 may include a camera, an optical sensor, a LIDAR sensor, a profilometer, a proximity detection sensor, a position sensor, a speed sensor, a potentiometer, an audio sensor or microphone, and/or other sensors to facilitate acquiring vision data. The first sensor 354 is configured to acquire vision data regarding the interior surface 116 of the tire casing 100. The vision data may include information regarding (or be analyzed to detect) one or more anomalies of the interior surface 116, such as damaged material, deformities, worn material, undesired material, scuffs, scratches, holes, nicks, punctures, tears, bumps, bulges, cracks, cuts, discolorations, burns, abrasions, weathering, stone trapping, etc.

The sensor mount 358 is configured to couple the first sensor 354 with the sensor rail 362. The sensor mount 358 is configured to slidably couple with the sensor rail 362 such that the first sensor 354 is capable of translating along the sensor rail 362. As shown in FIG. 21, the first sensor 354 is translatable in a substantially radial direction 368 relative to the tire casing 100. The sensor mount 358 may be further pivotably coupled with the sensor rail 362 such that the first sensor 354 is capable of pivoting in a direction 370 (e.g., about an axis of rotation parallel with the radial direction 368) relative to the tire casing 100. As shown in FIG. 21, the interior sensor assembly 350 includes a motor 340 (e.g., an interior sensor motor) configured to provide rotational energy to drive the first sensor 354 to translate in the radial direction 368 along the sensor rail 362 and rotate in the direction 370. Enabling the first sensor 354 to translate and pivot, via the motor 340, relative to the tire casing 100 allows for positioning the first sensor 354 to capture vision data including the interior surface 116 of the tire casing 100.

As shown in FIGS. 16, 19, and 21, the sensor shaft 366 couples the first sensor 354 with the second rotation assembly 294. The sensor shaft 366 extends in an axial direction from the housing 306 of the second rotation assembly 294 relative to the tire casing 100 such that when the tire casing 100 is coupled with the first rotation assembly 290 and the second rotation assembly *294 (see,* e.g., FIGS. 16, 19, and 21), the first sensor 354 is positioned within the tire casing 100. By way of example, the sensor shaft 366 positions the first sensor 354 within the opening 324 of the tire casing 100 axially between the bead areas 110. In some embodiments, the first sensor 354 is positioned to align with the center line C. The sensor shaft 366 is configured to fixedly couple the first sensor 354 relative to the tire casing 100 such that as the tire casing 100 rotates with the first rotation assembly 290 and the second rotation assembly 294, the first sensor 354 remains stationary. In other words, the first sensor 354 may not rotate with the tire casing 100. In some embodiments, the first sensor 354 is repositionable in the axial direction relative to the tire casing 100 along the axis A. By way of example, the sensor shaft 366 may include one or more telescoping sections, the first sensor 354 may translate in the axial direction along a rail, etc. In some embodiments, the interior sensor assembly 350 is coupled with and movable with the first rotation assembly 290. In some embodiments, the interior sensor assembly 350 omits the sensor rail 362 and the motor 340 such that the first sensor 354 is fixed (e.g., does not translate in the radial direction 368 or rotate in the direction 370) relative to the tire casing 100.

As shown in FIGS. 5-11, 14-19, and 22, the exterior sensor assembly 380 is configured to capture vision data of the exterior surface 114 of the tire casing 100. The exterior sensor assembly 380 includes a tire casing exterior sensor, shown as second sensor 384, and a robotic arm (e.g., a manipulator arm), shown as sensor arm 388. The second sensor 384 may include various sensors coupled to a free end of the sensor arm 388 (e.g., an end of the sensor arm 388 opposite the free end). By way of example, the second sensor 384 may include a camera, an optical sensor, a LIDAR sensor, a proximity detection sensor, a position sensor, a speed sensor, a potentiometer, an audio sensor or microphone, and/or other sensors to facilitate acquiring vision data. The second sensor 384 is configured to acquire vision data regarding the exterior surface 114 of the tire casing 100. The vision data may include information regarding (or be analyzed to detect) one or more anomalies of the exterior surface 114, such as damaged material, deformities, worn material, undesired material, scuffs, scratches, holes, nicks, punctures, tears, bumps, bulges, cracks, cuts, discolorations, burns, abrasions, weathering, stone trapping, etc.

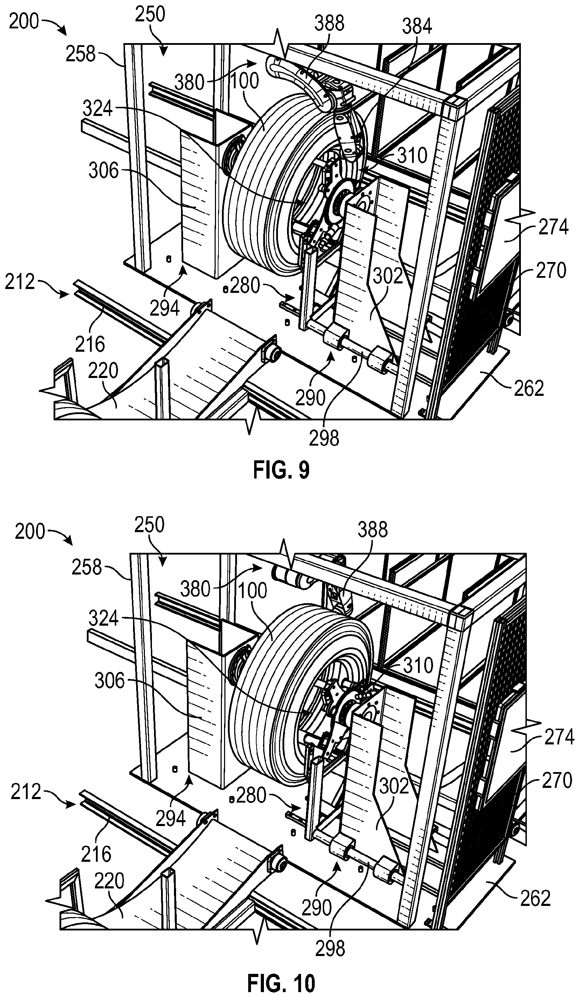

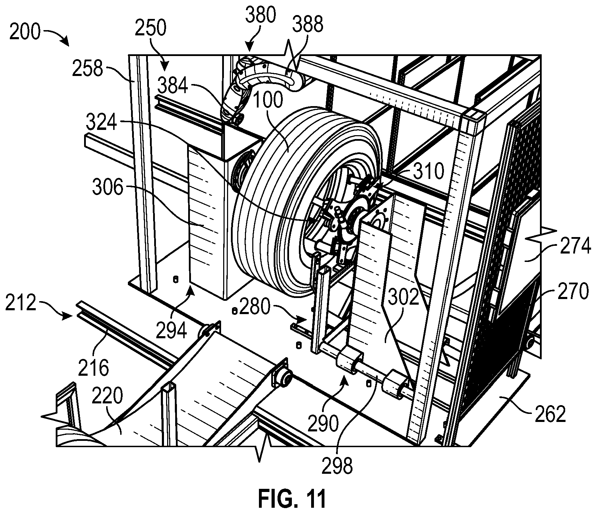

As shown in FIGS. 5-11, 14-19, and 22, the sensor arm 388 includes two or more sections configured to move relative to each other. The sensor arm 388 is configured to selectively position the second sensor 384 within an x, y, z coordinate space by way of one or more servomechanisms. By way of example, the exterior sensor assembly 380 may include one or more motors 340 to position the second sensor 384 within the x, y, z coordinate space at a desired position to capture vision data of the exterior surface 114. As shown in FIGS. 9-11, the sensor arm 388 is configured to move the second sensor 384 between a first position (e.g., as shown in FIG. 9) to capture vision data of a first side of the tire casing 100 (e.g., the right sidewall 106b, the right bead area 110, etc.), a second position (e.g., as shown in FIG. 10) to capture vision data of a second side of the tire casing 100 (e.g., the mounting surface 102, the shoulder areas 104, etc.), a third position (e.g., as shown in FIG. 11) to capture vision data of a third side of the tire casing 100 (e.g., the left sidewall 106a, the left bead area 110, etc.), and any other position within the x, y, z coordinate space surrounding the tire casing 100. In some embodiments, as shown in FIGS. 5-11 and 14-18, the sensor arm 388 is coupled to the frame 258. In other embodiments that omit the frame 258, as shown in FIG. 22, the sensor arm 388 is coupled to the housing 306 of the second rotation assembly 294. In still other embodiments, the sensor arm 388 is coupled to a different component of the tire inspection system 250 (e.g., the base 262, housing 302, etc.) or to the ground surface.

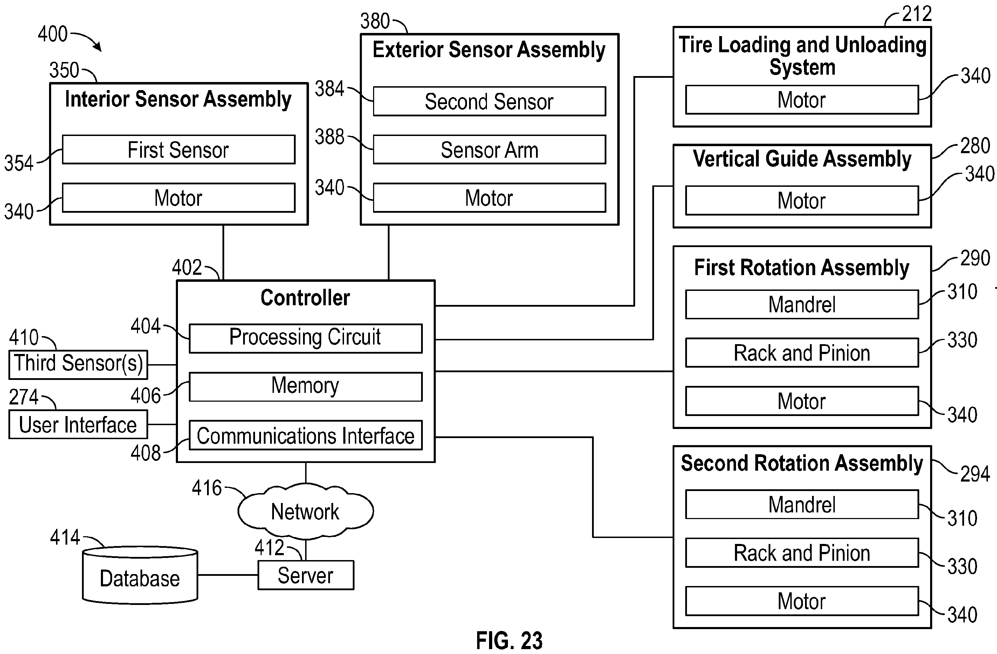

As shown in FIG. 23, the tire inspection control system 400 is operatively coupled with and configured to control operation of the tire loading and unloading system 212, the tire inspection system 250, and the various components thereof. The tire inspection control system 400 includes a controller 402 configured to communicate with one or more servers (e.g., web servers, application servers, system of servers, offsite computing system, etc.), shown as server 412, and a database (e.g., cloud storage, memory, etc.), shown as database 414. The various components of the tire inspection control system 400 may be in communication with each other directly and/or connected across a network 416 (e.g., intranet, Internet, VPN, a cellular network, a satellite network, Wi-Fi, etc.). In some embodiments, the components of the tire inspection control system 400 communicate wirelessly. By way of example, the tire inspection control system 400 may utilize a cellular network, Bluetooth, near field communication (NFC), Wi-Fi, or other types of wireless communication. In other embodiments, the tire inspection control system 400 utilizes wired communication. The tire inspection control system 400 may include a networked system of servers (e.g., servers 412) and wireless and/or wired components (e.g., user interface 274) operating on-premises, in the cloud, or a combination of both for redundancy. In some embodiments, the tire inspection control system 400 may perform one or more of the various processes and methods described herein without a connection to the network 416.

As shown in FIG. 23, the controller 402 includes a processing circuit 404, a memory 406, and a communications interface 408. The controller 402 may be implemented as a general-purpose processor, an application specific integrated circuit ("ASIC"), one or more field programmable gate arrays ("FPGAs"), a digital-signal-processor ("DSP"), circuits containing one or more processing components, circuitry for supporting a microprocessor, a group of processing components, or other suitable electronic processing components. The processing circuit 404 may include an ASIC, one or more FPGAs, a DSP, circuits containing one or more processing components, circuitry for supporting a microprocessor, a group of processing components, or other suitable electronic processing components. In some embodiments, the processing circuit 404 is configured to execute computer code stored in the memory 406 to facilitate the activities described herein. The memory 406 may be any volatile or non-volatile or non-transitory computer-readable storage medium capable of storing data or computer code relating to the activities described herein. According to an exemplary embodiment, the memory 406 includes computer code modules (e.g., executable code, object code, source code, script code, machine code, etc.) configured for execution by the processing circuit 404. In some embodiments, the controller 402 may represent a collection of processing devices. In such cases, the processing circuit 404 represents the collective processors of the devices, and the memory 406 represents the collective storage devices of the devices.

In one embodiment, the controller 402 is configured to selectively engage, selectively disengage, control, or otherwise communicate with components of the tire loading and unloading system 212 and the tire inspection system 250 (e.g., via the communications interface 408, a controller area network ("CAN") bus, etc.). According to an exemplary embodiment, the controller 402 is coupled to (e.g., communicably coupled to) components of the tire loading and unloading system 212 (e.g., the motor 340, the ramps 220, etc.), components of the first rotation assembly 290 and the second rotation assembly 294 (e.g., the mandrels 310, the motor 340, the rack and pinion 330, etc.), components of the interior sensor assembly 350 (e.g., the first sensor 354, the motor 340, etc.), components of the exterior sensor assembly 380 (e.g., the second sensor 384, the sensor arm 388, the motor 340, etc.), the user interface 274, and third sensors 410. By way of example, the controller 402 may send and receive signals (e.g., control signals, location signals, etc.) with the components of the tire loading and unloading system 212, the components of the first rotation assembly 290, the components of the second rotation assembly 294, the components of the interior sensor assembly 350, the components of the exterior sensor assembly 380, the user interface 274, the third sensors 410, and/or remote systems or devices (via the communications interface 408), including a server. By way of another example, the controller 402 may make determinations and control operation of the one or more components of the tire loading and unloading system 212 and the tire inspection system 250 responsive to signals received by the first sensor 354, the second sensor 384, and/or the third sensors 410 indicative of the data captured thereby and/or signals received by the user interface 274 indicative of an input received (e.g., from the user) thereby.

The third sensors 410 may include various sensors positioned about the system 200 to acquire information or data regarding operation of the tire loading and unloading system 212 and/or the tire inspection system 250. By way of example, the third sensors 410 may include an audio sensor or microphone, a camera, an optical sensor, a proximity detection sensor, a position sensor, an encoder, a limit/mechanical switch, a load sensor, a speed sensor, a potentiometer, and/or other sensors to facilitate acquiring data regarding operation of the tire loading and unloading system 212 and/or the tire inspection system 250. In some embodiments, the third sensors 410 are configured to monitor the operation (e.g., a rotational output) of one or more of the motors 340. In some embodiments, the third sensors 410 are configured to monitor a position of the ramps 220 relative to the tire inspection system 250 and the support arms 284 of the vertical guide assembly 280. In some embodiments, the third sensors 410 are configured to monitor a position of the support arms 284 relative to the first rotation assembly 290 and the second rotation assembly 294. By way of example, the third sensors 410 are configured to monitor the position of the support arms 284 and the tire casing 100 supported thereby to vertically align the opening 324 with the arms 314. In some embodiments, the third sensors 410 are configured to monitor a rotational speed and position of the arms 314 and the tire casing 100 coupled therewith. By way of example, the third sensors 410 may include a rotary encoder, tachometer, Hall effect sensor, accelerometer, etc. configured to monitor the rotation of the arms 314 and the tire casing 100 (e.g., to count the number of rotations thereof), detect a rotational output energy of the motor 340 driving the arms 314 (e.g., to control a rotational speed thereof), etc. In some embodiments, the third sensors 410 are configured to monitor a position of the arms 314 relative to the tire casing 100 (e.g., to position the flanges 322 to engage with the interior surface 116 of the tire casing 100). In some embodiments, the third sensors 410 are configured to monitor a longitudinal position of the first rotation assembly 290 (e.g., to control an amount of flexion of the tire casing 100 when the flanges 322 are engaged with the interior surface 116 thereof). In some embodiments, the system 200 includes additional third sensors 410 configured to facilitate detecting other information or data regarding operation of the tire loading and unloading system 212 and the tire inspection system 250.

In some embodiments, the server 412 includes and/or is in direct communication with the database 414. In some embodiments, the tire inspection control system 400 includes two or more servers 412 and/or databases 414. The server 412 is configured to perform various processing capabilities related to user requests (e.g., received via the user interface 274), generating responses in response to a command, and/or any other processing relating to the systems and methods described herein. The server 412 may be configured to store tire casing information (e.g., information relating to the size, type, usage, etc. of a tire casing 100), vision data (e.g., image and geometric data captured by the first sensor 354 and the second sensor 384), data acquired by the third sensors 410, and/or computer code for completing or facilitating the various processes, layers, and modules described in the present invention. By way of example, the tire casing information, vision data, and/or computer code may be stored in the database 414 operated by the server 412. In some embodiments, the server 412 is a cloud computing service and/or any other offsite computing and server system. In some embodiments, the server 412 is configured to execute portions of or all of the processing relating to the tire inspection control system 400 and/or any method described herein. In other embodiments, the controller 402 is configured to execute portions of or all of the processing relating to the tire inspection control system 400 and/or any method described herein.

To load a tire casing 100 onto the tire inspection system 250 to be inspected thereby, the tire casing 100 is first loaded onto the ramp 220. The tire casing 100 may be manually loaded (e.g., rolled, placed, etc.) onto the ramp 220, or a motor 340 may actuate a ramp 220 of the first storage area 204 such that the tire casing 100 is loaded onto the ramp 220 slidably coupled with the guide rails 216. The motor 340 is configured to drive a mechanical assembly (e.g., an actuator, a belt, a gear assembly, etc.) to translate the ramp 220 along the guide rails 216 such that the tire casing 100 supported by the ramp 220 is aligned (e.g., determined by the controller 402 based on data acquired by the third sensors 410) with the support arms 284 of the vertical guide assembly 280. The ramp 220 may rotate about an axis of rotation thereof to transfer the tire casing 100 to the tire inspection system 250 to be supported by the support arms 284 of the vertical guide assembly 280. In some embodiments, the tire casing 100 is loaded onto the tire inspection system 250 responsive to an input from the user to the user interface 274 to load the tire casing 100 onto the tire inspection system 250. In other embodiments, the tire loading and unloading system 212 automatically loads a tire casing 100 next in a queue after a preceding tire casing 100 is done being inspected by the tire inspection system 250. In some embodiments, the user may specify which tire casing 100 of the tire casings 100 stored in the first storage area 204 to load onto the tire inspection system 250.

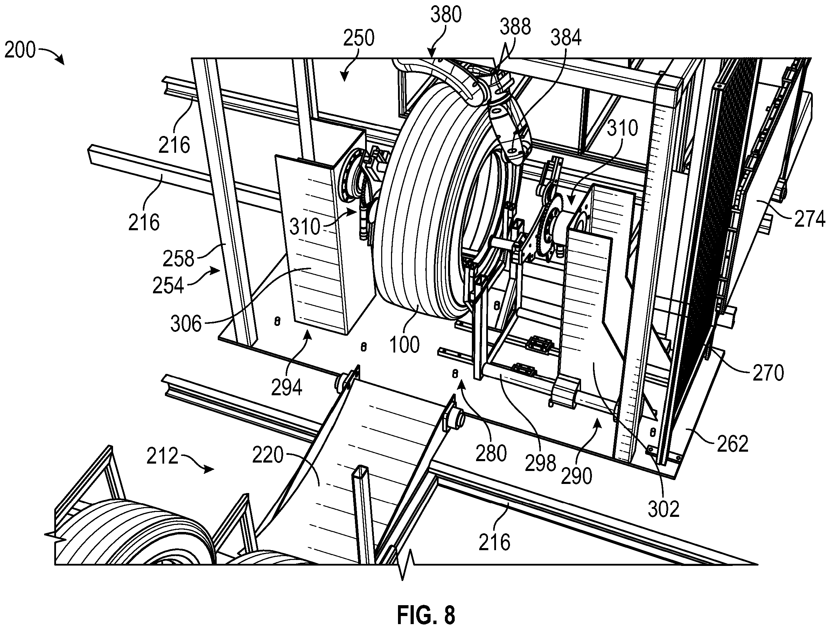

With the tire casing 100 supported by the support arms 284 of the vertical guide assembly 280, the vertical guide assembly 280 may actuate the support arms 284 and the tire casing 100 supported thereby in a vertically upward direction. By way of example, the motor 340 may provide mechanical energy to move the tire casing 100 upwards. The vertical guide assembly 280 is configured to position the tire casing 100 such that the opening 324 of the tire casing 100 is aligned (e.g., axially aligned) with the arms 314 of the first rotation assembly 290 and the second rotation assembly 294 and the second rotation assembly 294 *(see,* e.g., the position of the tire casing 100 relative to the mandrel 310 of the first rotation assembly 290 in FIG. 8). In some embodiments, the controller 402 determines, based on the data acquired by the third sensors 410, a position of the opening 324 relative to the arms 314 and commands the vertical guide assembly 280 to move the tire casing 100 to a position such that the arms 314 are able to extend within the opening 324. By way of example, the size of the opening 324 (e.g., the diameter) may vary depending on the size of the tire casing 100, and the controller 402 may control operation of the vertical guide assembly 280 in accordance with the size of the opening 324 to align the opening 324 with the arms 314. By way of another example, for tire casing 100 of the same size (e.g., having the same opening 324), the controller 402 may control operation of the vertical guide assembly 280 to position the subsequent tire casings 100 at the same position relative to the arms 314.

After positioning the tire casing 100 to align with the mandrel 310 (e.g., such that the arms 314 can extend within the opening 324), the first rotation assembly 290 translates along the guide rails 298 in a direction towards the tire casing 100 such that the arms 314 thereof extend within the opening 324. By way of example, the motor 340 may provide mechanical energy to move the first rotation assembly 290 such that the arms 314 extend, at least partially, within the opening 324. When the arms 314 of the first rotation assembly 290 are disposed within the opening 324, the motor 340 may provide rotational energy to the rack and pinion 330 to move the arms 314 in the direction 334 to engage and couple with the tire casing 100. The shaft 318 of the arms 314 is configured to engage with the bead area 110 such that the tire casing 100 is fully supported by the arms 314 (e.g., the tire casing 100 remains coupled with the arms 314 when the support arms 284 disengage from the tire casing 100).

The first rotation assembly 290 may translate along the guide rails 298 in a direction towards the second rotation assembly 294 such that the arms 314 of the mandrel 310 thereof extend within the opening 324 of the tire casing 100. By way of example, the arms 314 of the first rotation assembly 290 may extend within the opening 324 from a first, axial side thereof, and the arms 314 of the second rotation assembly 294 may extend within the opening 324 from a second, axial side thereof. In some embodiments, the first rotation assembly 290 positions the tire casing 100 relative to the second rotation assembly 294 (e.g., based on data acquired by the first sensor 354 and/or the third sensors 410) such that the first sensor 354 of the interior sensor assembly 350 is substantially aligned with the center line C of the tire casing 100 (e.g., axially centered in the opening 324 of the tire casing 100). In some embodiments, the second rotation assembly 294 is configured to translate in a direction towards the tire casing 100 coupled with the first rotation assembly 290 such that the arms 314 of the second rotation assembly 294 extend within the opening 324. In other embodiments, the arms 314 of the second rotation assembly 294 are configured to extend (e.g., move, telescope, etc.) from the second rotation assembly 294 within the second rotation assembly 294 (e.g., without the first rotation assembly 290 moving). With the arms 314 of the second rotation assembly 294 disposed, at least partially, within the opening 324, the motor 340 may provide rotational energy to the rack and pinion 330 to move the arms 314 in the direction 334 to engage and couple with the tire casing 100 (e.g., such that the arms 314 of the first rotation assembly 290 and the arms 314 of the second rotation assembly 294 are engaged and coupled with the tire casing 100).

According to an exemplary embodiment, before rotating the tire casing 100 to capture vision data thereof, the interior sensor assembly 350 and the exterior sensor assembly 380 are configured to position the first sensor 354 and the second sensor 384, respectively, relative to the tire casing 100. More specifically, the interior sensor assembly 350 and the exterior sensor assembly 380 are configured to position the first sensor 354 and the second sensor 384, respectively, based on the specification of the first sensor 354 and the second sensor 384. By way of example, the interior sensor assembly 350 and the exterior sensor assembly 380 may position the first sensor 354 and the second sensor 384, respectively, such that the tire casing 100 is within a field of view ("FOV") thereof. By way of another example, the interior sensor assembly 350 and the exterior sensor assembly 380 may position the first sensor 354 and the second sensor 384, respectively, such that the tire casing 100 is in focus of the first sensor 354 and the second sensor 384.

The interior sensor assembly 350 may adjust a position of the first sensor 354 in the radial direction 368 by driving a motor 340 to translate the first sensor 354 along the sensor rail 362. The interior sensor assembly 350 may further adjust the position of the first sensor 354 in the direction 370 by driving the motor 340 to rotate the first sensor 354. In some embodiments, rotating the first sensor 354 in the direction 370 facilitates capturing vision data of the interior surface 116 of the left and right bead areas 110.

The exterior sensor assembly 380 may adjust a position of the second sensor 384 by actuating the sensor arm 388. As shown in FIGS. 9-11, the sensor arm 388 is configured to move the second sensor 384 between a first position (e.g., as shown in FIG. 9) to capture vision data of a first side of the tire casing 100 (e.g., the right sidewall 106b, the right bead area 110, etc.), a second position (e.g., as shown in FIG. 10) to capture vision data of a second side of the tire casing 100 (e.g., the mounting surface 102, the shoulder areas 104, etc.), and a third position (e.g., as shown in FIG. 11) to capture vision data of a third side of the tire casing 100 (e.g., the left sidewall 106a, the left bead area 110, etc.). In some embodiments, the sensor arm 388 is configured to move the second sensor 384 to any other position within the x, y, z coordinate space surrounding the tire casing 100 to capture vision data thereof.

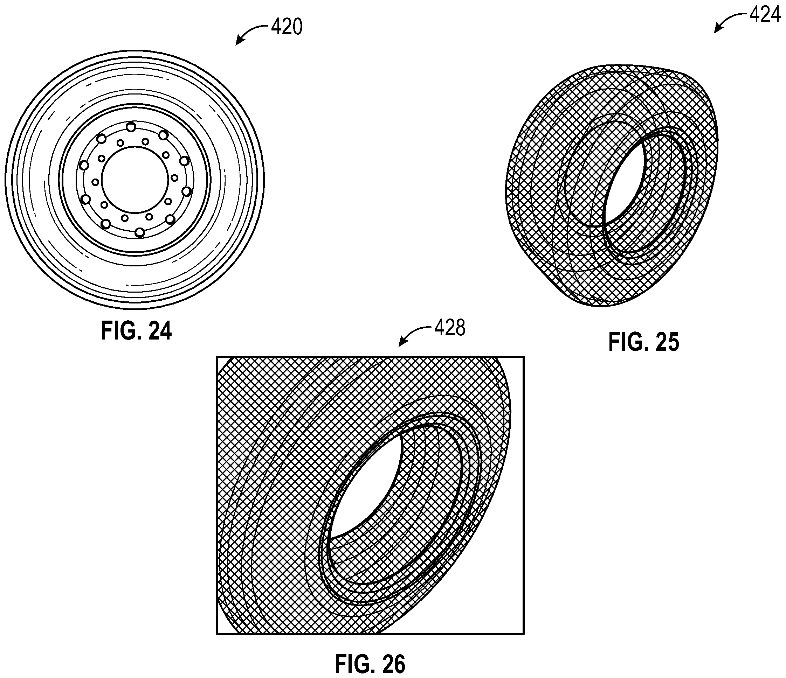

The first rotation assembly 290 and the second rotation assembly 294 are configured to rotate about the axis A such that the tire casing 100 rotates therewith. As the tire casing 100 rotates, the first sensor 354 is configured to capture vision data of the interior surface 116, and the second sensor 384 is configured to capture vision data of the exterior surface 114. The vision data captured by the first sensor 354 and the second sensor 384 may include image and video data captured by a camera, for example, and geometric data captured by a LIDAR sensor, for example. In some embodiments, the first sensor 354 and the second sensor 384 include a camera configured to capture both the image and video data and the geometric data. The first rotation assembly 290 and the second rotation assembly 294 may rotate the tire casing 100 to capture a sufficient amount of vision data to generate a graphical representation of the tire casing 100, as discussed in greater detail below with respect to FIGS. 24-26. In some embodiments, the tire casing 100 is rotated seven times to capture a sufficient amount of vision data. By way of example, the first sensor 354 may capture vision data including the interior surface 116 (e.g., the inner liner 118) of the tire casing 100 when the bead areas 110 are flexed (e.g., by the arms 314) during a first rotation and a second rotation, the first sensor 354 and the second sensor 384 may capture vision data including the exterior surface 114 and the interior surface 116 of the bead areas 110 when the bead areas 110 are flexed during a third rotation and a fourth rotation, the second sensor 384 may capture vision data including the exterior surface 114 of the sidewalls 106 when the bead areas 110 are relaxed (e.g., in a normal, resting position) during a fifth rotation and a sixth rotation, and the second sensor 384 may capture vision data including the exterior surface 114 of the mounting surface 102 during the seventh rotation. In other embodiments, the tire casing 100 is rotated more or fewer than seven times (e.g., one rotation, two rotations, 10 rotations, 20 rotations, 50 rotations, 100 rotations, etc.) to capture a sufficient amount of vision data. In some embodiments, the first sensor 354 and the second sensor 384 are configured to move, translate, rotate, etc. to capture the vision data of the tire casing 100 while the tire casing 100 remains stationary. By way of example, the interior sensor assembly 350 may facilitate moving the first sensor 354 within the opening 324 to capture vision data of the interior surface 116 and the sensor arm 388 of the exterior sensor assembly 380 may facilitate moving the second sensor 384 about the tire casing 100 to capture vision data of the exterior surface 114.

According to an exemplary embodiment, the flanges 322 of the arms 314 are configured to engage with the interior surface 116 of the tire casing 100 *(see,* e.g., FIGS. 20 and 21) to flex (e.g., bend, spread, manipulate, curve, etc.) the bead area 110 (e.g., left and right bead areas 110) axially away from the center line C of the mounting surface 102 (e.g., axially away from a center point of the crown 108). When the first rotation assembly 290 and the second rotation assembly 294 are coupled with the 100, the first rotation assembly 290 may translate in the lateral direction away from the second rotation assembly 294. As the first rotation assembly 290 translates, the flanges 322 of the arms 314 engage with the interior surface 116 of the tire casing 100 to flex the bead area 110 axially away from the center line C of the mounting surface 102. That is, flanges 322 of a first set of arms 314 of the first rotation assembly 290 engage with a first bead area 110, and flanges 322 of a second set of arms 314 of the second rotation assembly 294 engage with a second bead area 110 opposite the first bead area 110. While the bead area 110 is flexed, the first sensor 354 may capture vision data thereof.

As shown in FIGS. 24-26, the controller 402 is configured to use the vision data acquired by the first sensor 354 and the second sensor 384 to generate a first graphical representation of the tire casing 100, shown as image-based representation 420, a second graphical representation of the tire casing 100, shown as point cloud representation 424, and a third graphical representation of the tire casing 100, shown as graphical representation 428. The image-based representation 420 may be generated by the controller 402 using the image data captured by a camera (e.g., the first sensor 354 and the second sensor 384). The image-based representation 420 may include visual details of the tire casing 100, such as textures, patterns, colors, text, etc. The point cloud representation 424 may be generated by the controller 402 using the geometric data captured by a depth sensor (e.g., the first sensor 354 and the second sensor 384). The point cloud representation 424 may include the three-dimensional structure of the tire casing 100, including spatial dimensions and surface contours, in a set of coordinate points that define the shape of the tire casing 100.

According to an exemplary embodiment, the controller 402 is configured to wrap (e.g., map, overlay, etc.) the point cloud representation 424 onto the image-based representation 420 generated from the image data. This wrapping process may include corresponding (e.g., aligning) the spatial coordinates of the point cloud representation 424 with corresponding pixels or regions on the image-based representation 420. By overlaying the point cloud representation 424 onto the image-based representation 420, the controller 402 generates the graphical representation 428 that combines the image data with the geometric (e.g., spatial, point cloud, etc.) data. In some embodiments, the resolution (e.g., accuracy, detail, etc.) of the graphical representation 428 (and the image-based representation 420 and the point cloud representation 424) of the tire casing 100 increases with an increased number of rotations of the tire casing 100. By way of example, vision data acquired over 20 rotations of the tire casing 100 may result in generating a graphical representation 428 that is higher resolution than a graphical representation 428 generated using vision data acquired over four rotations of the tire casing 100. In some embodiments, the user provides an input indicating a desired resolution of the graphical representation 428, and the tire inspection system 250 rotates the tire casing 100 a sufficient number of revolutions to generate the graphical representation 428 in accordance with the desired resolution.

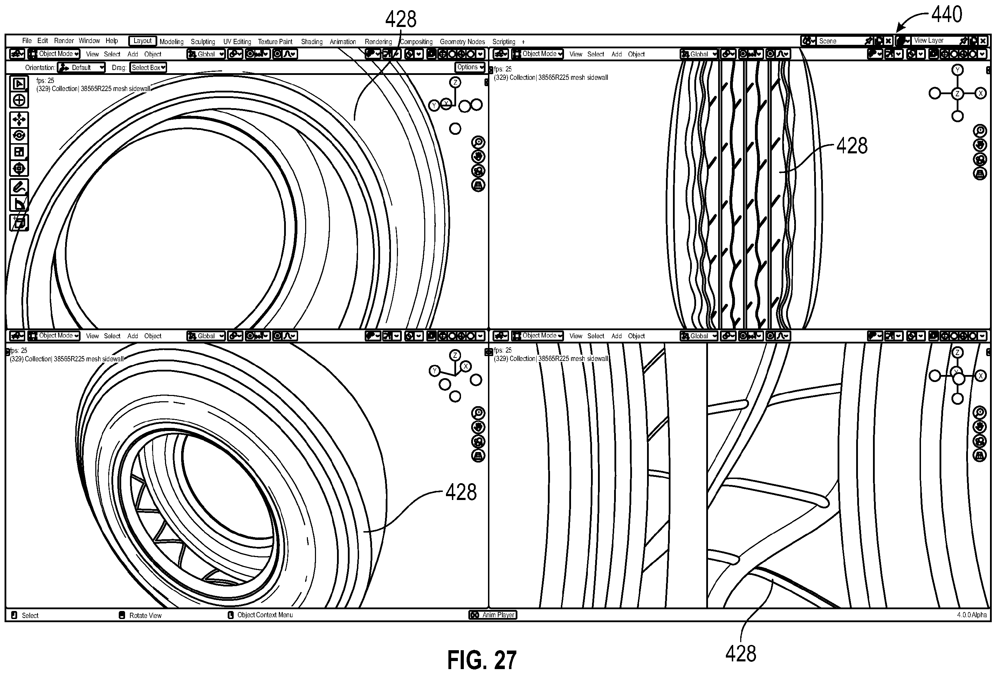

As shown in FIG. 27, a user interface 440 is configured to display the graphical representation 428. In some embodiments, the user interface 440 can be provided to a display device, such as the user interface 274. In some embodiments, the user interface 440 is configured to display the image-based representation 420 and the point cloud representation 424. The user may provide an input to the user interface 440 using one or more input devices such as buttons, switches, knobs, levers, dials, a mouse, etc. of the user interface 274 to manipulate the graphical representation 428. By way of example, the user may provide an input to rotate, pan, section, zoom in on, etc. the graphical representation 428.

According to an exemplary embodiment, the graphical representation 428 may be manipulated such that the user can inspect the graphical representation 428 for anomalies (or lack thereof), which are indicative of anomalies on the actual tire casing 100, which the graphical representation 428 is a representation of. By way of example, the user may manipulate the graphical representation 428 to inspect the exterior surface 114 and the interior surface 116 of the graphical representation 428 for anomalies. The graphical representation 428 facilitates providing the user the ability to inspect the tire casing 100 in a virtual environment without having to inspect the physical tire casing 100. By way of example, inspecting the interior surface 116 may be difficult for the user to inspect for anomalies because of the opening 324 being narrow, a lack of light, the bead area 110 obstructing a view of the operator, etc. Accordingly, the graphical representation 428 aids the user in inspecting these areas that are traditionally difficult to inspect.

In response to detecting the presence of an anomaly on the graphical representation 428, which is indicative of an anomaly on the actual tire casing 100, the user may provide an input (e.g., to the user interface 274, the user interface 440, etc.) to identify a location of the anomaly. In response to the input from the user identifying the anomaly, the controller 402 is configured to generate, on the graphical representation 428, an indication (e.g., a marker, an identification, etc.) of the location of the anomaly. By way of example, the user may provide an input to the user interface 440 indicative of the location of the anomaly, and the graphical representation 428 may display the indication indicative of the location of the anomaly. The location of the anomaly may be on the mounting surface 102, the shoulder areas 104, the bead area 110, the inner liner 118, and/or any other portion of the exterior surface 114 or the interior surface 116.

In response to detecting the presence of an anomaly on the graphical representation 428, which is indicative of an anomaly on the actual tire casing 100, the user may provide an input to identify a type of the anomaly. By way of example, the type of anomaly may include damaged material, deformities, worn material, undesired material, scuffs, scratches, holes, nicks, punctures, tears, bumps, bulges, cracks, cuts, discolorations, burns, abrasions, weathering, stone trapping, or another type of anomaly. In response to the input from the user identifying the anomaly, the controller 402 is configured to generate on the graphical representation 428 an indication (e.g., a marker, an identification, etc.) of the type of the anomaly. In some embodiments, the indication of the anomaly includes both the location and the type of the anomaly.

The identification of the anomaly (e.g., the identification of the location and the type of the anomaly) based on the input from the user may be stored in the database 414. By way of example, after identifying the location and the type of the anomaly, the database 414 stores the location and the type of the anomaly. In some embodiments, the database 414 is configured to store the vision data acquired by the first sensor 354 and the second sensor 384 of the tire casing 100. The controller 402 may be configured to utilize a machine learning (e.g., deep learning) algorithm to identify the location and the type of anomaly on the tire casing 100 based on the vision data and the user inputs identifying the anomaly stored in the database 414. In some embodiments, the controller 402 receives first vision data of a first tire casing 100 acquired by the first sensor 354 and the second sensor 384. In such embodiments, the controller 402 generates the graphical representation 428 and the user manipulates the graphical representation 428 to inspect the graphical representation 428 for any anomalies. In response to an input from the user, the controller 402 may be configured to identify a first anomaly of the first tire casing 100. The memory 406 and/or the database 414 may store the identification of the first anomaly. Next, the controller 402 receives second vision data of a second tire casing 100 acquired by the first sensor 354 and the second sensor 384. Based on the second vision data and the identification of the first anomaly, the controller 402 may detect a second anomaly (e.g., a location and a type of the second anomaly) of the second tire casing 100. By way of example, the tire inspection control system 400 may train a machine learning model on the vision data acquired of the tire casing 100 and the identifications of anomalies based on the user inputs to autonomously (e.g., without user input) identify a location and a type of anomaly on a tire casing 100.

In some embodiments, in response to the detection of an anomaly, the tire inspection control system 400 is configured to provide an indication on the tire casing 100 of the location of the anomaly. By way of example, the controller 402 may command a laser, a light, etc., of the user interface 274 to shine a laser or a light onto the tire casing 100 to indicate the location of the anomaly thereon. By way of another example, the system 200 may include a marker, a painter, etc. configured to mark (e.g., draw, highlight, etc.) or paint the tire casing 100 to indicate the location of the anomaly thereon. By way of still another example, the controller 402 may provide instructions via the user interface 274 and/or the user interface 440 indicative of the location of the anomaly. In such an example, the instructions may be provided visually (e.g., a message displayed on the user interface 274 or the user interface 440, an image of the location of the anomaly, etc.) and/or audibly (e.g., an audible message, a tone, etc.).

The controller 402 may be configured to determine, based on the identification of one or more anomalies or the lack thereof (e.g., a manual identification based on the user input, an automatic identification, etc.), whether the tire casing 100 should be repaired, whether the tire casing 100 should be discarded (e.g., thrown out, scrapped, etc.), and/or whether the tire casing 100 does not need to be repaired. In some embodiments, an absence of any anomaly may be indicative of a healthy tire casing 100, and the controller 402 may determine that the tire casing 100 does not need to be repaired. In such embodiments, the tire casing 100 may be identified as being ready to undergo a retreading operation.

In some embodiments, the controller 402 determines based on characteristics of the one or more anomalies (e.g., the type of the anomaly, the location of the anomaly, the number of anomalies, the combination of anomalies, etc.) to repair (but not discard) the tire casing 100. By way of example, upon a determination that the type of anomaly is a repairable anomaly (e.g., a surface defect, a discoloration, a puncture, etc.), the controller 402 may determine to repair the tire casing 100. In some embodiments, responsive to the identification of one or more anomalies, the controller 402 determines based on the characteristics of the one or more anomalies that the tire casing 100 does not need to be repaired. By way of example, the controller 402 may determine that the anomaly will not affect a retreading operation, will not affect a performance of the tire casing 100 after being retreaded, will not worsen, etc., and therefore that the tire casing 100 does not need to be repaired.

In some embodiments, the controller 402 determines based on characteristics of the one or more anomalies (e.g., the type of the anomaly, the location of the anomaly, the number of anomalies, the combination of anomalies, etc.) to discard the tire casing 100. By way of example, the controller 402 may determine that the anomaly will affect a retreading operation, will affect the performance of the tire casing 100 after being retreaded, will worsen, etc., and therefore that the tire casing 100 is to be discarded. The controller 402 may determine that a number of anomalies exceeds a threshold number of anomalies and produce a determination that the tire casing 100 should be discarded. By way of another example, the controller 402 may determine that, based on the type or location of the anomaly, the anomaly would require excessive effort, time or cost to repair, and/or not repairable, and therefore that the tire casing 100 is to be discarded. In some embodiments, a first anomaly (a first feature) alone would not result in a determination to discard the tire casing 100, a second anomaly (a second feature) alone would not result in a determination to discard the tire casing 100, but a combination of the first anomaly and the second anomaly would result in a determination to discard the tire casing 100.

In some embodiments, the controller 402 is configured to determine, based on an input from the user, whether the tire casing 100 should be repaired, whether the tire casing 100 should be discarded (e.g., thrown out, scrapped, etc.), and/or whether the tire casing 100 does not need to be repaired. In some embodiments, the tire inspection control system 400 trains the machine learning model on the determination based on the user input whether the tire casing 100 is to be repaired, discarded, or whether the tire casing 100 does not need to be repaired or discarded, such that the controller 402 automatically determines whether the tire casing 100 is to be repaired, discarded, or whether the tire casing 100 does not need to be repaired or discarded.

In some embodiments, the controller 402 is configured to identify information associated with the tire casing 100 based on the vision data acquired by the first sensor 354 and the second sensor 384. The information associated with the tire casing 100 may include a manufacturer of the tire casing 100, a date the tire casing 100 was manufactured, a model of the tire casing 100, maintenance history of the tire casing 100 (e.g., previous retreading operations performed on the tire casing 100, locations on the tire casing 100 of previously fixed damages, etc.), or still other information relating to the tire casing 100. By way of example, the tire casing 100 may include a machine-readable tag (e.g., a QR code, a barcode, an RFID tag, an NFC tag, etc.) indicative of the information associated with the tire casing 100. By way of another example, the tire casing 100 may include markings, embossment features, debossed features, etchings, logos, symbols, serial numbers, dates, etc. along the exterior surface 114 and/or the interior surface 116 of the tire casing 100 indicative of the information associated with the tire casing 100. This information associated with the tire casing 100 may be stored by the memory 406 or the database 414.

In some embodiments, the first sensor 354 and the second sensor 384 are configured to capture vision data of the tire casing 100, including 10 millimeter ("mm") (or greater) sized anomalies. By way of example, the first sensor 354 and the second sensor 384 may capture vision data of anomalies that are 10 mm wide, thick, long, deep, etc., and the graphical representation 428 may include a graphical representation of the anomalies that are 10 mm wide, thick, long, deep, etc. In some embodiments, the first sensor 354 and the second sensor 384 are configured to capture vision data of anomalies that are smaller than 10 mm (e.g., 1 mm, 2 mm, 5 mm, etc.). In some embodiments, the user interface 440 provides the user with the ability to measure one or more characteristics of the graphical representation 428. By way of example, a measurement (e.g., distance, depth, width, length, etc.) of the anomalies, tread depth, casing diameter D, casing width W, etc., may be determined by measuring the graphical representation 428. By way of another example, the controller 402 is configured to determine (e.g., calculate) a measurement of the anomalies, tread depth, casing diameter D, casing width W, etc., in response to receiving an input from the user.

As utilized herein with respect to numerical ranges, the terms "approximately," "about," "substantially," and similar terms generally mean +/-10% of the disclosed values, unless specified otherwise. As utilized herein with respect to structural features (e.g., to describe shape, size, orientation, direction, relative position, etc.), the terms "approximately," "about," "substantially," and similar terms are meant to cover minor variations in structure that may result from, for example, the manufacturing or assembly process and are intended to have a broad meaning in harmony with the common and accepted usage by those of ordinary skill in the art to which the subject matter of this invention pertains. Accordingly, these terms should be interpreted as indicating that insubstantial or inconsequential modifications or alterations of the subject matter described and claimed are considered to be within the scope of the invention as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the figures. It should be noted that the orientation of various elements may differ according to other exemplary embodiments, and that such variations are intended to be encompassed by the present invention.

The hardware and data processing components used to implement the various processes, operations, illustrative logics, logical blocks, modules, and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present invention. The memory may be or include volatile memory or non-volatile memory, and may include database components, object code components, script components, or any other type of information structure for supporting the various activities and information structures described in the present invention. According to an exemplary embodiment, the memory is communicably connected to the processor via a processing circuit and includes computer code for executing (e.g., by the processing circuit or the processor) the one or more processes described herein.

The present invention contemplates methods, systems, and program products on any machine-readable media for accomplishing various operations. The embodiments of the present invention may be implemented using existing computer processors, or by a special purpose computer processor for an appropriate system, incorporated for this or another purpose, or by a hardwired system. Embodiments within the scope of the present invention include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the invention. Likewise, software implementations of the described methods could be accomplished with standard programming techniques with rule-based logic and other logic to accomplish the various connection steps, processing steps, comparison steps, and decision steps.

It is important to note that the construction and arrangement of the system 200 and the systems and components thereof (e.g., the tire loading and unloading system 212, the tire inspection system 250, the tire inspection control system 400, etc.) as shown in the various exemplary embodiments is illustrative only. Additionally, any element disclosed in one embodiment may be incorporated or utilized with any other embodiment disclosed herein.

## Claims

1. A tire inspection system comprising:
a rotation assembly configured to selectively couple with a tire and rotate the tire about an axis of rotation;
at least one sensor configured to facilitate acquiring vision data of the tire; and
one or more processing circuits configured to:
receive the vision data of the tire;
generate, based on the vision data, a graphical representation of the tire for display on a user interface;
determine, based on an input from a user to the user interface, an identification of a feature on the graphical representation, the feature on the graphical representation being indicative of the feature on the tire; and
determine, based on the identification of the feature, whether to perform a maintenance action on the tire.

2. The tire inspection system of Claim 1, wherein the rotation assembly includes a plurality of arms configured to extend within an opening of the tire and engage with a bead area of the tire to couple the tire with the rotation assembly.

3. The tire inspection system of Claim 2, wherein the plurality of arms are configured to translate in a radial direction relative to the tire to selectively engage with the bead area.

4. The tire inspection system of any preceding claims, wherein the rotation assembly is a first rotation assembly and the tire inspection system further comprises a second rotation assembly configured to selectively couple with the tire and rotate the tire with the first rotation assembly.

5. The tire inspection system of Claim 4, wherein the first rotation assembly is configured to move in an axial direction relative to the second rotation assembly, wherein the second rotation assembly is axially fixed relative to the first rotation assembly, and wherein, when the tire is coupled to the first rotation assembly and the second rotation assembly, the first rotation assembly moves in the axial direction away from the second rotation assembly to flex the bead area of the tire axially away from a center line of the tire.

6. The tire inspection system of any preceding claim, further comprising a vertical guide assembly configured to support the tire and move in a vertical direction to selectively raise and lower the tire supported thereby, the vertical guide assembly configured to raise the tire to axially align the plurality of arms of the rotation assembly with the opening of the tire.

7. The tire inspection system of any preceding claim, wherein the at least one sensor includes a first sensor configured to capture vision data of an interior surface of the tire and a second sensor configured to capture vision data of an exterior surface of the tire.

8. The tire inspection system of Claim 7, wherein the second sensor is coupled with a robotic arm configured to move the second sensor to capture vision data of the exterior surface of the tire.

9. The tire inspection system of any preceding claim, wherein the tire is a first tire, the vision data is first vision data, and the feature on the graphical representation is a first feature, and wherein the one or more processing circuits are configured to:
receive, from the at least one sensor, second vision data of a second tire;
store, in a database, the identification of the first feature based on the input from the user and the second vision data;
identify, based on the identification of the first feature based on the input from the user and the second vision data, a second feature on the second tire; and
determine, in response to identifying the second feature, to at least one of repair the second tire or discard the second tire.

10. The tire inspection system of any preceding claim, wherein the identification of the feature includes at least one of a location of the feature on the tire or a type of the feature.

11. The tire inspection system of any preceding claim, wherein the at least one sensor includes a camera and a depth sensor, and wherein the vision data includes image data captured by the camera and point cloud data captured by the depth sensor.

12. A method of inspecting a tire, comprising utilizing the tire inspection system of any preceding claim to identify a plurality of features of a tire.

13. A non-transitory computer-readable medium configured to store instructions thereon, which, when executed by a processor, cause a processor to:
receive vision data of a tire;
generate, based on the vision data, a graphical representation of the tire for display on a user interface;
determine, based on an input from a user to the user interface, an identification of a feature on the graphical representation, the feature on the graphical representation being indicative of the feature on the tire; and
determine, based on the identification of the feature, whether to perform a maintenance action on the tire.
